# EUROPÄISCHE PATENTSCHRIFT

(11) **EP 4 412 815 B1**
(45) Veröffentlichungstag und Bekanntmachung des Hinweises auf die Patenterteilung: **14.01.2026**
(21) Anmeldenummer: 22797680.0
(22) Anmeldetag: 26.09.2022
(51) Int. Cl.: B29C 48/692, B29C 48/693

(54) **VERFAHREN SOWIE EINE ANLAGE ZUR FILTRATION VON FLÜSSIGKEITEN UND/ODER SCHMELZEN**
METHOD AND SYSTEM FOR THE FILTRATION OF LIQUIDS AND/OR MELTS
MÉTHODE ET SYSTÈME DE FILTRATION DE LIQUIDES ET/OU DE MATIÈRES FONDUES

(30) Priorität: 04.10.2021 DE 102021125712
(43) Veröffentlichungstag der Anmeldung: 14.08.2024
(73) Patentinhaber: Next Generation Analytics GmbH, 4710 Grieskirchen (AT)
(72) Erfinder: KASTNER, Friedrich, 4710 Grieskirchen (AT)
(74) Vertreter: Burger, Hannes Alfred
(86) Internationale Anmeldenummer: PCT/EP2022/076694
(87) Internationale Veröffentlichungsnummer: WO 2023/057252

(56) Entgegenhaltungen:
- EP-A1- 0 976 525
- EP-A2- 0 275 462
- EP-B1- 2 789 447
- WO-A1-2017/163180
- DE-A1- 102008 014 054
- DE-A1- 19 722 352
- DE-B- 1 131 875

## Beschreibung

Die Erfindung betrifft ein Verfahren sowie eine Anlage zur Filtration von Flüssigkeiten und/oder Schmelzen.

Es beschreibt die WO 2017/163180 A1 eine Filtrationsvorrichtung für Extrusionsverfahren ohne Unterbrechungen. Bei einem Extrusionsverfahren von zu regenerierenden Kunststoffmaterialien mit einem hohen Anteil an Verunreinigungen wird eine Filtervorrichtung verwendet, deren Funktion darin besteht, alle im Material vorhandenen Verunreinigungen zu entfernen, bevor das Endprodukt erhalten wird. Die Filtrationsvorrichtung umfasst einen Materialeinlasskanal, der sich in einen ersten Einlasskanal und einen zweiten Einlasskanal aufteilt, und der erste Einlasskanal zu einer ersten Filterkammer führt und der zweite Einlasskanal zu einer zweiten Filterkammer führt. Die erste Filterkammer ist an deren Ausgang mit einem ersten Auslasskanal und die zweite Filterkammer ist an deren Ausgang mit einem zweiten Auslasskanal versehen. Die Auslasskanäle gehen wiederum in einen gemeinsamen Kanal über, der geeignet ist, das Material zu einem Extrusionskopf zu befördern. Zur Klemmung der Filterbänder sind zylinderförmig ausgebildete Verriegelungselemente vorgesehen. In jedem der Einlasskanäle und auch in jedem der Auslasskanäle ist jeweils ein Strömungsventil angeordnet, um bei einem Filterwechsel ein Hindurchströmen des Kunststoffmaterials für diese Zeitspanne zu unterbinden. Es konnte auch hier beim Klemmen der Filterbänder zu einer relativen Lageveränderung derselben bezüglich des Filtergehäuses kommen.

Die DE 197 22 352 A1 beschreibt einen diskontinuierlichen, automatisch arbeitenden Siebwechsler zum Filtern von polymeren, elastomeren und sonstigen filterbaren Stoffen. Der Filterstreifen wird von der Ablaufrolle durch den Siebwechsler geführt und in der Klemmung der Antriebswelle für den Filterstreifen gespannt. Die Antriebswelle und die beiden Dichtungswellen sind durch zwei Zwischenritzel verbunden, sodass die Dichtungswellen synchron durch die Antriebswelle angetrieben werden. Das zu filternde Material drückt das Feinsieb auf ein Stützsieb, welches an einer Lochscheibe abgestützt wird. Das Ansteigen der Verschmutzung wird über die Druckmessung erfasst. Bei Erreichen eines vorbestimmten Wertes wird die Antriebswelle bei gleichzeitiger Freigabe der Klemmung der Dichtungswellen um eine 1/3-Umdrehung weitergedreht. Das Feinsieb ist nun um den Betrag der 1/3-Umdrehung durch das Gehäuse gezogen worden, sodass ein Druckabbau durch die saubere Filterfläche erfolgen kann. Anstelle der beiden Dichtungswellen können beidseitig auch Klemmbalken mit jeweils einer Keilfläche vorgesehen werden, welche jeweils mittels einer Kniehebelanordnung aufeinander zu bewegbar sind. Beim Klemmen des Filterstreifens kann es zu einer relativen Lageveränderung desselben bezüglich des Filtergehäuses kommen.

Die EP 2 789 447 B1 beschreibt eine automatische Siebwechslervorrichtung, besonders geeignet für den Einsatz an Anlagen zur Herstellung, Verarbeitung, Wiederverwertung und Behandlung von thermoplastischen Materialien, welche einer Extrudervorrichtung nachgeschaltet ist. Die Siebwechslervorrichtung umfasst einen Rahmen, zwei gegenüberliegende Seitenplatten, welche an dem Rahmen befestigt sind und mit einer Einlassöffnung und einem Paar an Einlasskanälen sowie mit einer Auslassöffnung und mit einem Paar an Auslasskanälen versehen sind. Zwischen jedem der Einlasskanäle und jedem der Auslasskanäle ist jeweils eine Siebeinheit mit einem durch die jeweilige Kammer hindurchführbaren Filterband angeordnet. Zur Klemmung und Halterung des Filterbandes ist ein in Richtung der Verstellbewegung des Filterbandes verlagerbarer Klemmkeil mit einem diesen durchsetzenden Durchgangsloch vorgesehen. Der jeweilige Klemmkeil ist in einer eigenen und zwischen den gegenüberliegenden Seitenplatten befindlichen Platte aufgenommen, welche ebenfalls in Richtung der Verstellbewegung des Filterbandes verlagerbar ist. Durch eine relative Verlagerung der jeweiligen Platte bezüglich der gegenüberliegenden Seitenplatten konnte eine Unterbrechung des Schmelzestroms zu der in der Platte befindlichen Kammer herbeigeführt werden und so eine Weiterbewegung des Filterbandes und damit verbunden ein Filterwechsel durchgeführt werden. Es konnte auch hier beim Klemmen der jeweiligen Filterbänder zu einer relativen Lageveränderung derselben bezüglich der jeweiligen Platte kommen.

Aufgabe der vorliegenden Erfindung war es, die Nachteile des Standes der Technik zu überwinden und ein Verfahren und eine Vorrichtung zur Verfügung zu stellen, mittels derer ein Benutzer in der Lage ist, einen dauerhaften und über eine lange Zeitspanne andauernden Filtervorgang auf einem konstanten Druckniveau vorzunehmen. Eine weitere Aufgabe besteht darin, die jeweiligen Filterelemente ohne relative Verlagerung beim Klemmvorgang ortsfest positioniert in deren Filtrationsstellung geklemmt zu halten.

Diese Aufgaben werden durch ein Verfahren und eine Filtrationsanlage gemäß den Ansprüchen gelöst.

Das erfindungsgemäße Verfahren dient zur Filtration von Flüssigkeiten und/oder Schmelzen mit darin noch enthaltenen unterschiedlichsten Verunreinigungen mittels einer Filtrationsanlage und somit zum Filtern eines fließfähigen Materials. Bei dem Verfahren werden zumindest folgende durchgeführt:
- Bereitstellen eines Gehäuses mit einem gemeinsamen Zufuhrkanal und einem gemeinsamen Abfuhrkanal,
- Bereitstellen einer ersten Filtervorrichtung mit einem ersten Einlasskanal, einer ersten Filterkammer, einem durch die erste Filterkammer hindurchgeführten bandförmigen ersten Filterelement, einer ersten Klemmeinheit und einem ersten Auslasskanal, wobei der erste Einlasskanal mit dem gemeinsamen Zufuhrkanal in Strömungsverbindung steht und der erste Auslasskanal mit dem gemeinsamen Abfuhrkanal in Strömungsverbindung steht, und wobei das erste Filterelement in Verstellrichtung des ersten Filterelements gesehen beidseits der ersten Filterkammer mittels einer ersten und zweiten Klemmvorrichtung der ersten Klemmeinheit bedarfsweise geklemmt gehalten wird,
- Bereitstellen einer zweiten Filtervorrichtung mit einem zweiten Einlasskanal, einer zweiten Filterkammer, einem durch die zweite Filterkammer hindurchgeführten bandförmigen zweiten Filterelement, einer zweiten Klemmeinheit und einem zweiten Auslasskanal, wobei der zweite Einlasskanal mit dem gemeinsamen Zufuhrkanal in Strömungsverbindung steht und der zweite Auslasskanal mit dem gemeinsamen Abfuhrkanal in Strömungsverbindung steht, und wobei das zweite Filterelement in Verstellrichtung des zweiten Filterelements gesehen beidseits der zweiten Filterkammer mittels einer dritten und vierten Klemmvorrichtung der zweiten Klemmeinheit bedarfsweise geklemmt gehalten wird,
- Bereitstellen der zu filtrierenden Flüssigkeit und/oder Schmelze in einem fließfähigen Aggregatzustand und Zuleiten der Flüssigkeit und/oder Schmelze in den gemeinsamen Zufuhrkanal, wobei die Flüssigkeit und/oder Schmelze durch zumindest eine der Filtervorrichtungen hin zum gemeinsamen Abfuhrkanal weitergefördert und dabei gefiltert wird, wobei weiters noch vorgesehen ist
- dass jede der Klemmvorrichtung der ersten Klemmeinheit und der zweiten Klemmeinheit jeweils ein Klemmelement und jeweils ein mit diesem zusammenwirkendes Stellelement umfasst,
- dass jedes der Klemmelemente in einer Normalrichtung auf eine Flachseite des jeweiligen Filterelements relativ bezüglich des Gehäuses verstellbar geführt wird und in einer Querausrichtung bezüglich der Verstellrichtung des jeweiligen Filterelements angeordnet ist,
- dass jedes der Stellelemente in einer parallelen Richtung bezüglich der Flachseite des jeweiligen Filterelements relativ bezüglich des Gehäuses verstellbar geführt wird und ebenfalls in einer Querausrichtung bezüglich der Verstellrichtung des jeweiligen Filterelements angeordnet ist,
- dass die Klemmelemente an deren dem jeweiligen Stellelement zugewendeten Seite jeweils eine Klemmelement-Kontaktfläche aufweisen,
- dass die Stellelemente an deren dem jeweiligen Klemmelement zugewendeten Seite jeweils eine Stellelement-Kontaktfläche aufweisen,
- dass die jeweils zusammenwirkenden und einander zugewendeten Klemmelement-Kontaktflächen und Stellelement-Kontaktflächen gegengleich zueinander verlaufend ausgerichtet sind und die jeweiligen Klemmelement-Kontaktflächen und die Stellelement-Kontaktflächen weiters eine schräg verlaufende Längsausrichtung bezüglich der Flachseite des jeweiligen Filterelements aufweisen, und
- dass bei einer relativen Verstellung des Stellelements in Richtung einer ersten Verstellrichtung bezüglich des damit zusammenwirkenden Klemmelements das Klemmelement in eine am jeweiligen Filterelement anliegende Klemmstellung gegen das Gehäuse gedrückt wird und bei einer bezüglich der ersten Verstellrichtung dazu entgegengesetzten zweiten Verstellrichtung des Stellelements das damit zusammenwirkende Klemmelement in eine Freigabestellung für das jeweilige Filterelement verstellt wird.

Vorteilhaft ist bei den hier gewählten Verfahrensschritten, dass so in der anliegenden Klemmstellung der Klemmelemente der einzelnen Klemmeinheiten mit deren Klemmvorrichtungen stets auf das jeweilige Filterelement eine in normaler Ausrichtung verlaufende Druckkraft ausgeübt wird. Somit werden Scherkräfte auf das jeweilige Filterelement ausgehend von jeder der Klemmvorrichtungen vermieden. Durch die Wahl der schräg verlaufenden Kontaktflächen zwischen dem Klemmelement und dem Stellelement erfolgt stets eine auf mechanischer Basis beruhende Kraftübertragung und Umlenkung ausgehend vom jeweiligen Stellorgan oder Antriebsmittel auf das Stellelement und von diesem weiter auf das Klemmelement. Sollte nach dem Erreichen der Klemmstellung ein Druckverlust im Stellorgan oder ein Defekt im Antriebsmittel auftreten, wird weiterhin die Druckkraft ausgehend vom Klemmelement auf das jeweilige Filterelement ausgeübt. Damit werden Dichtheitsprobleme im Bereich der einzelnen Klemmvorrichtungen vermieden und ein ungewollter Austritt der Flüssigkeit und/oder Schmelze unterbunden. Weiters wird durch die relative Verlagerung der einzelnen Klemmelemente ausschließlich in normaler Ausrichtung bezüglich der jeweiligen Filterelemente eine ungewollte Verlagerung des Filterelements im jeweiligen Klemmbereich verhindert.

Weiters ist ein Vorgehen vorteilhaft, bei dem die jeweils miteinander zusammenwirkenden Klemmelemente und Stellelemente im Bereich von deren Klemmelement-Kontaktflächen und Stellelement-Kontaktflächen mittels einer ersten Führungsanordnung längsverschieblich aneinander gehalten und geführt werden. Damit kann zwischen den jeweils zusammenwirkenden Klemmelementen und Stellelementen in beiden Verstellrichtungen der Stellelemente eine gemeinsame Verstellung und Mitnahme erzielt werden.

Eine weitere vorteilhafte Vorgehensweise ist dadurch gekennzeichnet, dass die jeweiligen Stellelemente an deren vom jeweiligen Filterelement abgewendeten Seite mittels einer zweiten Führungsanordnung längsverschieblich am Gehäuse gehalten und geführt werden. So kann eine eindeutige und sichere relative Lagerung und Führung des jeweiligen Stellelements am Gehäuse erzielt werden.

Vorteilhaft ist auch eine Verfahrensvariante, bei welcher die Klemmelemente in Ansicht auf deren dem jeweiligen Filterelement zugewendeten Klemmfläche umfänglich durchgängig gegen das Gehäuse abgedichtet sind. So kann eine umfängliche Abdichtung um das jeweilige Klemmelement herum ermöglicht und ein Durchtritt der Flüssigkeit und/oder Schmelze hin zum jeweiligen Stellelement verhindert werden.

Eine andere Vorgehensweise zeichnet sich dadurch aus, wenn jede der Klemmvorrichtungen der Klemmeinheiten, insbesondere jedes von deren Stellelementen, unabhängig voneinander zwischen deren Klemmstellung und deren Freigabestellung verstellt wird. So kann eine individuelle Reihenfolge der Freigabe und der Rückstellung in die Klemmstellung ermöglicht werden. Weiters kann so aber auch der Wechsel oder der Erneuerungsvorgang der jeweiligen aktiven Filterfläche exakt eingestellt und gesteuert werden.

Weiters ist ein Vorgehen vorteilhaft, bei dem bei sich in der Klemmstellung befindlichen Klemmelementen die jeweilige Filterkammer gegen das Gehäuse abgedichtet wird. Damit kann im Filterbetrieb ein ungewollter Austritt der Flüssigkeit und/oder Schmelze aus der jeweiligen Filterkammer verhindert werden.

Eine weitere vorteilhafte Vorgehensweise ist dadurch gekennzeichnet, dass im Filterbetrieb der Filtrationsanlage in einem der Einlasskanäle stets zumindest ein Anteil von 10% der Flüssigkeit und/oder Schmelze und im anderen Einlasskanal der verbleibende Anteil auf 100% der hindurch gefördert wird. Durch die Wahl eines Mindestanteils an Flüssigkeit und/oder Schmelze kann ein Verklumpen oder Verlegen von einer der Filtervorrichtungen sicher verhindert werden. Weiters kann so aber auch der Zeitpunkt des Erneuerns bzw. des Filterwechsels zueinander zwischen den beiden Filtervorrichtungen zueinander unterschiedliche eingestellt und festgelegt werden. Weiters können so auch Druckschwankung nach dem Durchtritt der Flüssigkeit und/oder Schmelze durch die jeweiligen Filterkammern im Bereich des gemeinsamen Abfuhrkanals minimiert oder gänzlich verhindert werden.

Vorteilhaft ist auch eine Verfahrensvariante, bei welcher bei einem Erneuern der aktiven Filterfläche von einem der Filterelemente folgende Schritte durchgeführt werden
- Verringern des zugeführten Anteils an Flüssigkeit und/oder Schmelze in die jeweilige Filterkammer bis auf maximal 2% des gesamten Massenstroms/Volumenstroms oder vollständiges Unterbinden der Zufuhr an Flüssigkeit und/oder Schmelze in die jeweilige Filterkammer,
- Verstellen der jeweiligen Klemmvorrichtungen der jeweiligen Klemmeinheit in deren Freigabestellung,
- Hindurchbewegen des jeweiligen Filterelements in dessen Verstellrichtung um einen vorbestimmten Verstellweg durch die jeweilige Filterkammer,
- Verstellen von einer der beiden Klemmvorrichtungen der jeweiligen Klemmeinheit in deren Klemmstellung,
- Vorspannen des jeweiligen Filterelements mit einer vorbestimmten Zugkraft in Richtung auf die andere der beiden Klemmvorrichtungen der jeweiligen Klemmeinheit,
- Verstellen der anderen der beiden Klemmvorrichtungen der jeweiligen Klemmeinheit in deren Klemmstellung, und
- Freigabe der Zufuhr der Flüssigkeit und/oder Schmelze in die jeweilige Filterkammer mit der erneuerten Filterfläche des jeweiligen Filterelements.

Vorteilhaft ist bei diesen Verfahrensschritten, dass so eine vorbestimmte Vorspannung des jeweiligen Filterelements im Zuge des Filterwechsels bzw. des Erneuerns der aktiven Filterfläche aufgebaut und eingehalten werden kann. Durch das ortsfeste Positionieren des jeweiligen Filterelements im Bereich von einer der beiden Klemmvorrichtungen kann eine unverschiebliche Halterung des Filterelements erzielt werden und nach Erreichen der vorbestimmten Zugkraft und damit verbunden Vorspannung kann erst dann die Klemmung im Bereich der anderen Klemmvorrichtung erfolgen.

Eine weitere vorteilhafte Ausgestaltung des Verfahrens ist es, wenn das Verringern des zugeführten Anteils an Flüssigkeit und/oder Schmelze in die jeweilige Filterkammer durch Stellorgane in jedem der Einlasskanäle und/oder in jedem der Auslasskanäle oder durch ein Stellventil im Übergangsabschnitt zu den ersten Einlasskanälen bewirkt wird.

Vorteilhaft hierbei ist, dass die Stellorgane und/oder das Stellventil eingesetzt werden können, um den in die jeweilige Filterkammer zugeführten Anteil an Flüssigkeit und/oder Schmelze zu verringern, um entweder die Filtervorrichtungen zu entlasten, indem der Druck reduziert wird, die Filtervorrichtungen gleichmäßig einzusetzen, um eine übermäßige Verschmutzung einer Filtervorrichtung zu vermeiden, aber insbesondere um den Durchfluss von Flüssigkeit und/oder Schmelze durch die beiden Filtervorrichtungen so zu steuern, dass nicht beide gleichzeitig erneuert bzw. gewechselt werden müssen, was ein Abschalten der Filtrationsanlage und Stillstand der Flüssigkeit und/oder Schmelze zur Folge hätte.

Idealer Weise wird entweder ein Stellventil im Übergangsabschnitt verwendet oder Stellorgane in den Einlass- bzw. Auslasskanälen. Es ist aber auch denkbar, dass Stellventil und Stellorgane zusammen verwendet werden, und dann alternativ oder zusammen eingesetzt werden.

Weiters ist ein Vorgehen vorteilhaft, bei dem die Stellorgane und/oder das Stellventil durch eine Steuerungsvorrichtung angesteuert werden.

Vorteilhaft hierbei ist, dass die Steuerungsvorrichtung das Einstellen der Stellorgane und/oder des Stellventils automatisch und möglicher Weise auch exakter vornehmen kann, im Vergleich zur manuellen Betätigung, wodurch Zeit, Kosten und Material gespart werden können, und gleichzeitig ein Risiko für die Anlage und die Bediener reduziert werden kann.

Eine andere Vorgehensweise zeichnet sich dadurch aus, wenn die auf das jeweilige Filterelement beim Erneuern von dessen aktiven Filterfläche aufgebrachte Zugkraft ermittelt und/oder überwacht wird. Damit kann ein Überspannen oder ein zu loses Filterelement in der Filterkammer vermieden werden.

Weiters ist ein Vorgehen vorteilhaft, bei dem das jeweilige Filterelement, insbesondere vor dem Erneuern von dessen aktiven Filterfläche, vor dem Zuführen in die jeweilige Filterkammer auf einen Temperaturwert ausgewählt aus einem Temperatur-Wertebereich mit einer unteren Grenze von 20 °C über Raumtemperatur, insbesondere Aufschmelztemperatur der jeweiligen Schmelze, und einer oberen Grenze von 400 °C, insbesondere der jeweiligen Verarbeitungstemperatur bzw. geringfügig über der jeweiligen Verarbeitungstemperatur erwärmt wird. Durch das Verbringen auf einen vorbestimmten Temperaturwert kann so ein ungewolltes Anhaften oder teilweises Erkalten der Flüssigkeit und/oder Schmelze unmittelbar nach dem Filterwechsel erzielt werden.

Eine weitere vorteilhafte Vorgehensweise ist dadurch gekennzeichnet, dass das jeweilige Filterelement, insbesondere nach dem Erneuern von dessen aktiven Filterfläche, nach dem Hindurchführen durch die jeweilige Filterkammer auf einen Temperaturwert ausgewählt aus einem Temperatur-Wertebereich mit einer unteren Grenze von 20 °C über Raumtemperatur, insbesondere Aufschmelztemperatur der jeweiligen Schmelze, und einer oberen Grenze von 400 °C, insbesondere der jeweiligen Verarbeitungstemperatur bzw. geringfügig über der jeweiligen Verarbeitungstemperatur erwärmt wird. Damit kann nach dem Filterwechsel eine zu rasche Abkühlung des jeweiligen Filterelements vor dem Aufspulen auf einer Spulvorrichtung verhindert werden.

Vorteilhaft ist auch eine Verfahrensvariante, bei welcher in jedem der Einlasskanäle und/oder in jeder der Filterkammern auf der dem jeweiligen Einlasskanal zugewendeten Seite der in der Flüssigkeit und/oder Schmelze aufgebaute Druck durch Drucksensoren ermittelt wird. Damit können die in der jeweiligen Filtervorrichtung herrschenden Druckverhältnisse ermittelt und in Abhängigkeit davon der Filterwechsel oder das Erneuern der aktiven Filterfläche geplant und durchgeführt werden.

Eine weiter Ausgestaltung sieht vor, dass die Steuerungsvorrichtung dazu eingerichtet ist, die durch die Drucksensoren ermittelten Drücke zu überwachen, und die Stellorgane und/oder das Stellventil so anzusteuern, dass die Drücke innerhalb vorbestimmter Grenzen bleiben.

Dadurch kann vorteilhafter Weise sichergestellt werden, dass der Druck in den Einlasskanälen beispielsweise nicht zu hoch wird, was sich negativ auf die Filtervorrichtungen und/oder der Flüssigkeit und/oder Schmelze auswirken könnte. Alternativ oder zusätzlich kann sichergestellt werden, dass der Druck nicht zu niedrig wird, was sich ebenfalls negativ auf die Flüssigkeit und/oder Schmelze auswirken könnte.

Eine vorteilhafte Ausgestaltung sieht vor, dass die Steuerungsvorrichtung mithilfe maschinellen Lernens auf der Grundlage der durch die Drucksensoren ermittelten Drücke, Werkstoffparameter der zu verarbeitenden Flüssigkeit und/oder Schmelze, und Stellparameter der Stellorgane und/oder des Stellventiles, dazu eingerichtet ist, die Stellorgane und/oder das Stellventil proaktiv so anzusteuern, dass die Drücke innerhalb vorbestimmter Grenzen bleiben.

Vorteilhaft hierbei ist, dass durch das maschinelle Lernen, die Veränderung der Drücke verfolgt werden können, und basierend auf früheren Beobachtungen die Stellorgane und/oder das Stellventil bereits dann, also proaktiv, wenn sich ein unerwünschter Druck aufzubauen beginnt, so angesteuert werden können, dass die Drücke die Grenzwerte nicht über- bzw. unterschreiten. Idealer Weise können die Drücke dadurch nahe an optimalen Werten für die Filterung gehalten werden.

Eine andere vorteilhafte Ausgestaltung sieht vor, dass die Flüssigkeit bzw. die Schmelze ein Polymer, insbesondere ein Kunststoff, und/oder ein pastöses Material ist. Das Material kann weiters insbesondere ein aufgeschmolzenes Sekundär-Kunststoffmaterial sein.

Das vorgeschlagene erfinderische Verfahren ist bei der Anwendung auf solch ein Polymer oder pastöses Material, bzw. Sekundär-Kunststoffmaterial besonders vorteilhaft, da hier ein Stillstehen und/oder Erkalten des Materials besonders große Auswirkungen hat, wie etwa das Erstarren des Materials und dem damit verbundenen Reinigungsaufwand.

Die Aufgabe der Erfindung wird aber unabhängig davon auch durch eine Filtrationsanlage gemäß den dort angegebenen Merkmalen gelöst. Die Filtrationsanlage dient zur Filtration von Flüssigkeiten und/oder Schmelzen mit darin noch enthaltenen unterschiedlichsten Verunreinigungen, die Filtrationsanlage umfasst
- ein Gehäuse mit einem gemeinsamen Zufuhrkanal und einem gemeinsamen Abfuhrkanal,
- eine erste Filtervorrichtung mit einem ersten Einlasskanal, einer ersten Filterkammer, einem durch die erste Filterkammer hindurchgeführten bandförmigen ersten Filterelement, einer ersten Klemmeinheit und einem ersten Auslasskanal, wobei der erste Einlasskanal mit dem gemeinsamen Zufuhrkanal in Strömungsverbindung steht und der erste Auslasskanal mit dem gemeinsamen Abfuhrkanal in Strömungsverbindung steht, und wobei das erste Filterelement in Verstellrichtung des ersten Filterelements gesehen beidseits der ersten Filterkammer mittels einer ersten und zweiten Klemmvorrichtung der ersten Klemmeinheit bedarfsweise geklemmt gehalten ist,
- eine zweite Filtervorrichtung mit einem zweiten Einlasskanal, einer zweiten Filterkammer, einem durch die zweite Filterkammer hindurchgeführten bandförmigen zweiten Filterelement, einer zweiten Klemmeinheit und einem zweiten Auslasskanal, wobei der zweite Einlasskanal mit dem gemeinsamen Zufuhrkanal in Strömungsverbindung steht und der zweite Auslasskanal mit dem gemeinsamen Abfuhrkanal in Strömungsverbindung steht, und wobei das zweite Filterelement in Verstellrichtung des zweiten Filterelements gesehen beidseits der zweiten Filterkammer mittels einer dritten und vierten Klemmvorrichtung der zweiten Klemmeinheit bedarfsweise geklemmt gehalten ist, wobei weiters noch vorgesehen ist
- dass jede der Klemmvorrichtung der ersten Klemmeinheit und der zweiten Klemmeinheit jeweils ein Klemmelement und jeweils ein mit diesem zusammenwirkendes Stellelement umfasst,
- dass jedes der Klemmelemente in einer Normalrichtung auf eine Flachseite des jeweiligen Filterelements relativ bezüglich des Gehäuses verstellbar geführt ist und in einer Querausrichtung bezüglich der Verstellrichtung des jeweiligen Filterelements angeordnet ist,
- dass jedes der Stellelemente in einer parallelen Richtung bezüglich der Flachseite des jeweiligen Filterelements relativ bezüglich des Gehäuses verstellbar geführt ist und ebenfalls in einer Querausrichtung bezüglich der Verstellrichtung des jeweiligen Filterelements angeordnet ist,
- dass die Klemmelemente an deren dem jeweiligen Stellelement zugewendeten Seite jeweils eine Klemmelement-Kontaktfläche aufweisen,
- dass die Stellelemente an deren dem jeweiligen Klemmelement zugewendeten Seite jeweils eine Stellelement-Kontaktfläche aufweisen,
- dass die jeweils zusammenwirkenden und einander zugewendeten Klemmelement-Kontaktflächen und Stellelement-Kontaktflächen gegengleich zueinander verlaufend ausgerichtet sind und die jeweiligen Klemmelement-Kontaktflächen und die Stellelement-Kontaktflächen weiters eine schräg verlaufende Längsausrichtung bezüglich der Flachseite des jeweiligen Filterelements aufweisen, und
- dass bei einer relativen Verstellung des Stellelements in Richtung einer ersten Verstellrichtung bezüglich des damit zusammenwirkenden Klemmelements das Klemmelement in eine am jeweiligen Filterelement anliegende Klemmstellung gegen das Gehäuse gedrückt ist und bei einer bezüglich der ersten Verstellrichtung dazu entgegengesetzten zweiten Verstellrichtung des Stellelements das damit zusammenwirkende Klemmelement in eine Freigabestellung für das jeweilige Filterelement verstellbar ist.

Der dadurch erzielte Vorteil liegt darin, dass so in der anliegenden Klemmstellung der Klemmelemente der einzelnen Klemmeinheiten mit deren Klemmvorrichtungen stets auf das jeweilige Filterelement eine in normaler Ausrichtung verlaufende Druckkraft ausgeübt wird. Somit werden Scherkräfte auf das jeweilige Filterelement ausgehend von jeder der Klemmvorrichtungen vermieden. Durch die Wahl der schräg verlaufenden Kontaktflächen zwischen dem Klemmelement und dem Stellelement erfolgt stets eine auf mechanischer Basis beruhende Kraftübertragung und Umlenkung ausgehend vom jeweiligen Stellorgan oder Antriebsmittel auf das Stellelement und von diesem weiter auf das Klemmelement. Sollte nach dem Erreichen der Klemmstellung ein Druckverlust im Stellorgan oder ein Defekt im Antriebsmittel auftreten, wird weiterhin die Druckkraft ausgehend vom Klemmelement auf das jeweilige Filterelement ausgeübt. Damit werden Dichtheitsprobleme im Bereich der einzelnen Klemmvorrichtungen vermieden und ein ungewollter Austritt der Flüssigkeit und/oder Schmelze unterbunden. Weiters wird durch die relative Verlagerung der einzelnen Klemmelemente ausschließlich in normaler Ausrichtung bezüglich der jeweiligen Filterelemente eine ungewollte Verlagerung des Filterelements im jeweiligen Klemmbereich verhindert.

Weiters kann es vorteilhaft sein, wenn die jeweils miteinander zusammenwirkenden Klemmelemente und Stellelemente im Bereich von deren Klemmelement-Kontaktflächen und Stellelement-Kontaktflächen mittels einer ersten Führungsanordnung längsverschieblich aneinander gehalten und geführt sind. Damit kann zwischen den jeweils zusammenwirkenden Klemmelementen und Stellelementen in beiden Verstellrichtungen der Stellelemente eine gemeinsame Verstellung und Mitnahme erzielt werden.

Eine andere Ausführungsform zeichnet sich dadurch aus, dass die jeweiligen Stellelemente an deren vom jeweiligen Filterelement abgewendeten Seite mittels einer zweiten Führungsanordnung längsverschieblich am Gehäuse gehalten und geführt sind. So kann eine eindeutige und sichere relative Lagerung und Führung des jeweiligen Stellelements am Gehäuse erzielt werden.

Eine weitere mögliche Ausführungsform hat die Merkmale, dass die Klemmelemente in Ansicht auf deren dem jeweiligen Filterelement zugewendeten Klemmfläche umfänglich durchgängig gegen das Gehäuse abgedichtet sind. So kann eine umfängliche Abdichtung um das jeweilige Klemmelement herum ermöglicht und ein Durchtritt der Flüssigkeit und/oder Schmelze hin zum jeweiligen Stellelement verhindert werden.

Eine weitere Ausbildung sieht vor, dass jede der Klemmvorrichtung der Klemmeinheiten, insbesondere jedes von deren Stellelementen, mit einem eigenen Stellantrieb in Antriebsverbindung steht. So kann eine individuelle Reihenfolge der Freigabe und der Rückstellung in die Klemmstellung ermöglicht werden. Weiters kann so aber auch der Wechsel oder der Erneuerungsvorgang der jeweiligen aktiven Filterfläche exakt eingestellt und gesteuert werden.

Eine weitere Ausgestaltung sieht vor, dass die Filtrationsanlage weiterhin Stellorgane in jedem der Einlasskanäle und/oder in jedem der Auslasskanäle und/oder ein Stellventil im Übergangsabschnitt zu den ersten Einlasskanälen, umfasst, und dass die Stellorgane und/oder das Stellventil den zugeführten Anteil an Flüssigkeit und/oder Schmelze in die jeweilige Filterkammer begrenzen können.

Vorteilhaft hierbei ist, dass die Stellorgane und/oder das Stellventil eingesetzt werden können, um den in die jeweilige Filterkammer zugeführten Anteil an Flüssigkeit und/oder Schmelze zu verringern, um entweder die Filtervorrichtungen zu entlasten, indem der Druck reduziert wird, die Filtervorrichtungen gleichmäßig einzusetzen, um eine übermäßige Verschmutzung einer Filtervorrichtung zu vermeiden, aber insbesondere um den Durchfluss von Flüssigkeit und/oder Schmelze durch die beiden Filtervorrichtungen so zu steuern, dass nicht beide gleichzeitig erneuert bzw. gewechselt werden müssen, was ein Abschalten der Filtrationsanlage und Stillstand der Flüssigkeit und/oder Schmelze zur Folge hätte.

Idealer Weise wird entweder ein Stellventil im Übergangsabschnitt verwendet oder Stellorgane in den Einlass- bzw. Auslasskanälen. Es ist aber auch denkbar, dass Stellventil und Stellorgane zusammen verwendet werden, und dann alternativ oder zusammen eingesetzt werden.

Eine andere Ausgestaltung sieht vor, dass die Filtrationsanlage weiterhin eine Steuerungsvorrichtung umfasst, die die Stellorgane und/oder das Stellventil ansteuert.

Vorteilhaft hierbei ist, dass die Steuerungsvorrichtung das Einstellen der Stellorgane und/oder des Stellventils automatisch und möglicher Weise auch exakter vornehmen kann, im Vergleich zur manuellen Betätigung, wodurch Zeit, Kosten und Material gespart werden können, und gleichzeitig ein Risiko für die Anlage und die Bediener reduziert werden kann.

Eine andere Ausführungsform zeichnet sich dadurch aus, dass jeweils eine erste Heizvorrichtung bei jedem der Filterelemente vorgesehen ist, und jede der ersten Heizvorrichtungen der jeweiligen Filterkammer in Verstellrichtung des jeweiligen Filterelements gesehen vorgeordnet ist. Durch das Verbringen auf einen vorbestimmten Temperaturwert kann so ein ungewolltes Anhaften oder teilweises Erkalten der Flüssigkeit und/oder Schmelze unmittelbar nach dem Filterwechsel erzielt werden.

Eine weitere bevorzugte Ausführungsform ist dadurch gekennzeichnet, dass jeweils eine zweite Heizvorrichtung bei jedem der Filterelemente vorgesehen ist, und jede der zweiten Heizvorrichtungen der jeweiligen Filterkammer in Verstellrichtung des jeweiligen Filterelements gesehen nachgeordnet ist. Damit kann nach dem Filterwechsel eine zu rasche Abkühlung des jeweiligen Filterelements vor dem Aufspulen auf einer Spulvorrichtung verhindert werden.

Weiters kann es vorteilhaft sein, wenn in jedem der Einlasskanäle und/oder in jeder der Filterkammern auf der dem jeweiligen Einlasskanal zugewendeten Seite zumindest ein Drucksensor angeordnet oder aufgenommen ist und die Drucksensoren zur Ermittlung des in der Flüssigkeit und/oder Schmelze aufgebauten Drucks ausgebildet sind. Damit können die in der jeweiligen Filtervorrichtung herrschenden Druckverhältnisse ermittelt und in Abhängigkeit davon der Filterwechsel oder das Erneuern der aktiven Filterfläche geplant und durchgeführt werden.

Eine weiter Ausgestaltung sieht vor, dass die Filtrationsanlage eine Steuerungsvorrichtung umfasst, und die Steuerungsvorrichtung dazu eingerichtet ist, die durch die Drucksensoren ermittelten Drücke zu überwachen, und die Stellorgane und/oder das Stellventil so anzusteuern, dass die Drücke innerhalb vorbestimmter Grenzen bleiben.

Dadurch kann vorteilhafter Weise sichergestellt werden, dass der Druck in den Einlasskanälen beispielsweise nicht zu hoch wird, was sich negativ auf die Filtervorrichtungen und/oder die Flüssigkeit und/oder Schmelze auswirken könnte. Alternativ oder zusätzlich kann sichergestellt werden, dass der Druck nicht zu niedrig wird, was sich ebenfalls negativ auf die Flüssigkeit und/oder Schmelze auswirken könnte.

Eine vorteilhafte Ausgestaltung sieht vor, dass die Filtrationsanlage eine Steuerungsvorrichtung umfasst, und die Steuerungsvorrichtung mithilfe maschinellen Lernens auf der Grundlage der durch die Drucksensoren ermittelten Drücke, Werkstoffparameter der zu verarbeitenden Flüssigkeit und/oder Schmelze, und Stellparameter der Stellorgane und/oder des Stellventiles, dazu eingerichtet ist, die Stellorgane und/oder das Stellventil proaktiv so anzusteuern, dass die Drücke innerhalb vorbestimmter Grenzen bleiben.

Vorteilhaft hierbei ist, dass durch das maschinelle Lernen, die Veränderung der Drücke verfolgt werden können, und basierend auf früheren Beobachtungen die Stellorgane und/oder das Stellventil bereits dann, also proaktiv, wenn sich ein unerwünschter Druck aufzubauen beginnt, so angesteuert werden können, dass die Drücke die Grenzwerte nicht über- bzw. unterschreiten. Idealer Weise können die Drücke dadurch nahe an optimalen Werten für die Filterung gehalten werden.

Eine andere vorteilhafte Ausgestaltung sieht vor, dass die Flüssigkeit bzw. die Schmelze ein Polymer, insbesondere ein Kunststoff, und/oder ein pastöses Material ist. Das Material kann weiters insbesondere ein aufgeschmolzenes Sekundär-Kunststoffmaterial sein.

Das vorgeschlagene erfinderische Verfahren ist bei der Anwendung auf solch ein Polymer oder pastöses Material, bzw. Sekundär-Kunststoffmaterial besonders vorteilhaft, da hier ein Stillstehen und/oder Erkalten des Materials besonders große Auswirkungen hat, wie etwa das Erstarren des Materials und dem damit verbundenen Reinigungsaufwand.

Zum besseren Verständnis der Erfindung wird diese anhand der nachfolgenden Figuren näher erläutert.

Es zeigen jeweils in stark vereinfachter, schematischer Darstellung:
- Fig. 1: die Filtrationsanlage in Draufsicht geschnitten;
- Fig. 2: die Filtrationsanlage nach Fig. 1 mit deren beiden jeweils in vollständiger Sperrstellung befindlichen Filtervorrichtungen, in Ansicht geschnitten gemäß den Linien II-II in Fig. 1;
- Fig. 3: eine Schemadarstellung der Kanalführung der Filtrationsanlage nach Fig. 2 bei einer sich in der Filterwechselstellung befindlichen Filtervorrichtung;
- Fig. 4: die Filtrationsanlage nach den Fig. 1 bis 3 mit deren Klemmeinheiten, in Draufsicht sowie vergrößerter Darstellung;
- Fig. 5: eine der Klemmvorrichtungen der Klemmeinheiten, in Ansicht geschnitten gemäß den Linien V-V in Fig. 4;
- Fig. 6: eine weitere mögliche Ausbildung der Zufuhrregelung der Flüssigkeit und/oder Schmelze zu den beiden Filtervorrichtungen, in schematisch vereinfachter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

In ihrer vorliegenden Verwendung sollen die Begriffe "umfassend", "weist auf", "aufweisend", "schließt ein", "einschließlich", "enthält", "enthaltend" und jegliche Variationen dieser eine nicht ausschließliche Einbeziehung abdecken.

Als weiterer Begriff wird auch noch "wahlweise" verwendet. Darunter wird verstanden, dass dieser Verfahrensschritt oder diese Anlagenkomponente grundsätzlich vorhanden ist, jedoch je nach Einsatzbedingungen eingesetzt werden kann, dies jedoch nicht zwingend erfolgen muss.

Bei der zu filternden Flüssigkeit und/oder Schmelze, z.B. eines Sekundär-Kunststoffmaterials, handelt es sich beispielsweise um einen Kunststoffwerkstoff, der bereits zumindest einmal zu einem Produkt verarbeitet worden ist und einer Wiederaufbereitung zugeführt werden soll. Ein Sekundär-Kunststoffmaterial wird sortenrein getrennt, gegebenenfalls zerkleinert, und dann bevorzugt in einem dafür bestimmten Extruder oder ähnlichen Aufschmelzanlagen zu der zu filtrierenden Schmelze überführt. Das zu filternde Material kann als Flüssigkeit und/oder Schmelze einer nachfolgend beschriebenen Filtrationsanlage 1 zugeleitet oder zugeführt werden, in welcher der Filtrationsvorgang durchgeführt wird. Die Flüssigkeit und/oder Schmelze weist dazu einen fließfähigen Aggregatzustand auf.

Bei einem Sekundär-Kunststoffmaterial bzw. der daraus gebildeten Schmelze kann es sich insbesondere um Polykondensatschmelzen handeln. Generell ist ein Sekundär-Kunststoffmaterial, bzw. allgemeiner ein Sekundärrohstoff, ein Rohstoff, der durch Aufarbeitung, wie etwa Recycling, aus entsorgtem Material hergestellt werden. Solche Sekundär-Materialen können zur Herstellung von neuen Produkten verwendet werden. Als Primär-Rohstoffe werden dagegen sogenannte natürliche Ressourcen, also der Natur entnommene Stoffe bezeichnet. Als Beispiele für derartige Kunststoffe seien Polyethylenterephthalat (PET), Polytrimethylenterephthalat (PTT), Polybutylenterephthalat (PBT), Polyethylennaphthalat (PEN), Polyethylenfuranoat (PEF) oder Polyamide genannt. Bei dem Werkstoff Polyethylenterephthalat (PET) kann es sich insbesondere um PET-C handeln, welches teilkristallin ist und eine dünnflüssige Schmelze bildet. Die PET-C Schmelze weist eine geringe Viskosität auf. Beispielhafte Werte der intrinsischen Viskosität liegen im Anwendungsfall der vorliegenden Erfindung zwischen 0,45 und 1,2 dl/g.

Eine weitere Anwendung ist beispielsweise die Filtration von Lebensmitteln. Darunter fallen beispielsweise flüssige Lebensmittel mit hoher Viskosität, z. B. Honig, Tomatenerzeugnisse, Soßen, Konfitüren, Mais- und Ahornsirup, Melassen, Senf, Säfte, Frucht- und Gemüsekonzentrate; tierische Fette und hochviskose Pflanzenöle, Schmalz, Margarine, Kakaobutter, Erdnussbutter, Pflanzenfette und ähnliche Erzeugnisse. Ebenso anwendbar ist die Filtration auf flüssige Lebensmittel mit niedriger Viskosität, wie Getränke, Spirituosen, Wein, Ketchup, Melasse, Senf, Sojasauce, Zuckersirup, Pflanzenöle, Essig und Wasser. Je nach Beschaffenheit und/oder Temperatur kann die Einstufung der zuvor genannten Waren als Lebensmittel mit hoher bzw. niedriger Viskosität erfolgen.

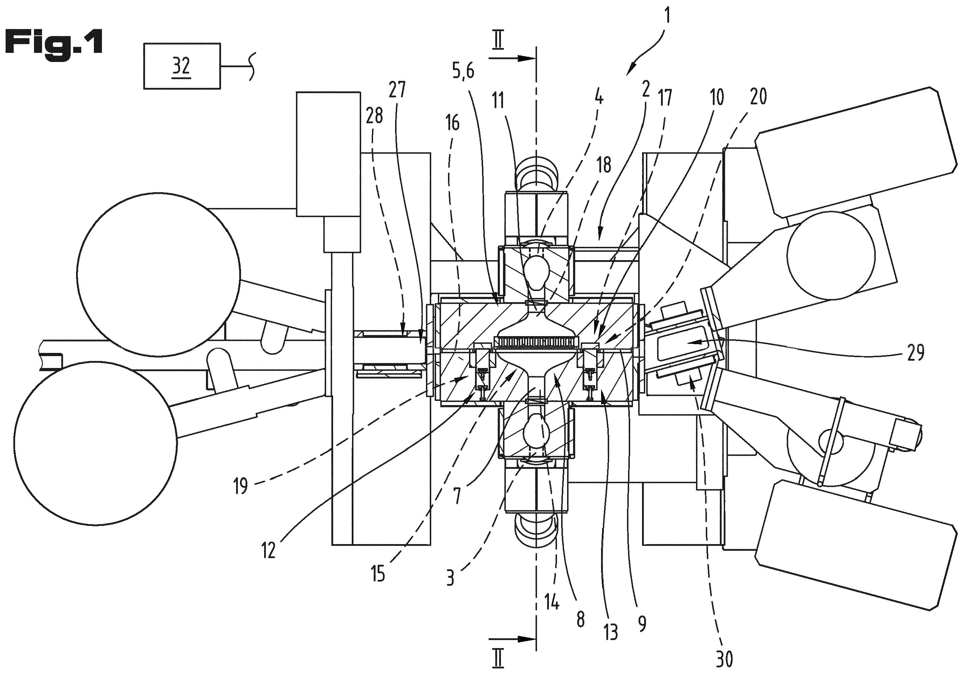

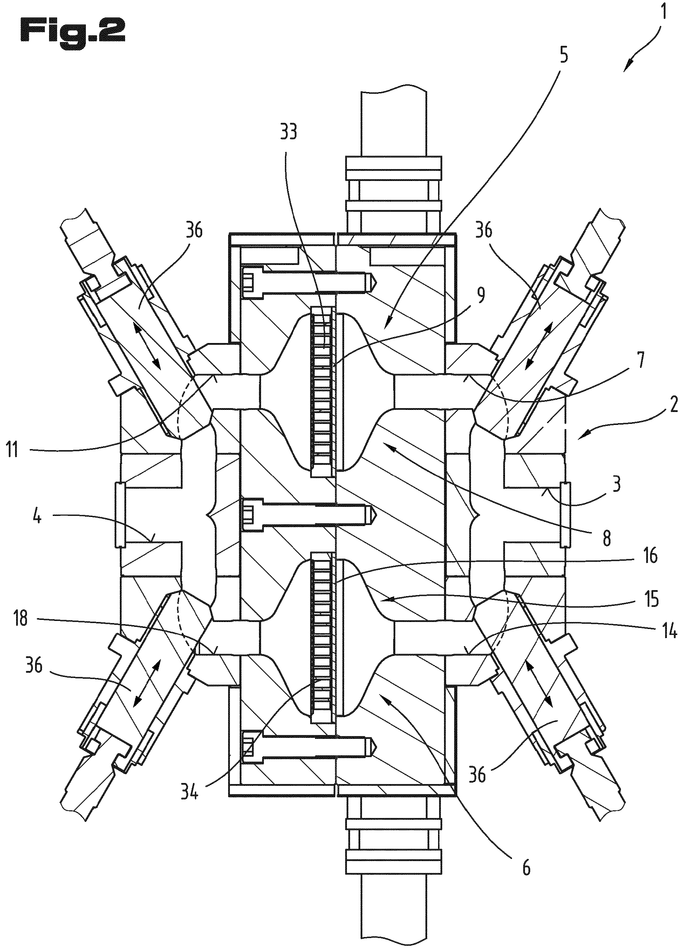

In den Fig. 1 bis 5 ist Filtrationsanlage 1 in verschieden Ansichten und Detaildarstellungen gezeigt, wobei teilweise auch eine stilisierte Darstellung gewählt wurde, um die Übersichtlichkeit zu verbessern. Auf die Darstellung der Vorrichtung zum Zerkleinern und Aufschmelzen, also zum Bereitstellen der Flüssigkeit und/oder Schmelze, beispielsweise aus einem Sekundär-Kunststoffmaterial, wurde ebenfalls verzichtet. Dazu können Anlagen und Vorrichtungen aus dem bekannten Stand der Technik eingesetzt werden.

Grundsätzlich umfasst die Filtrationsanlage 1 ein Gehäuse 2, welches bevorzugt aus mehreren Bauteilkomponenten zusammengesetzt sein kann bzw. ist. In dem vereinfacht angedeuteten Gehäuse 2 ist zumindest ein Zufuhrkanal 3 und zumindest ein Abfuhrkanal 4 ausgebildet oder angeordnet. Bevorzugt handelt es sich um einen gemeinsamen Zufuhrkanal 3 und einen gemeinsamen Abfuhrkanal 4. Weiters sind im Gehäuse 2 eine erste Filtervorrichtung 5 und eine zweite Filtervorrichtung 6 angeordnet oder ausgebildet. Der Aufbau der beiden Filtervorrichtungen 5, 6 ist bevorzugt grundsätzlich gleich zueinander gewählt, wobei zur besseren Unterscheidung die jeweiligen Bauteilkomponenten nachfolgend gesondert beschrieben werden. Es handelt sich grundsätzlich um eine parallele Anordnung oder Ausbildung der beiden Filtervorrichtungen 5, 6 zueinander. Dies kann übereinander oder auch nebeneinander erfolgen. Im vorliegenden Ausführungsbeispiel ist eine Anordnung gezeigt, bei welcher die beiden Filtervorrichtungen 5, 6 übereinander angeordnet sind.

Ausgehend vom Zufuhrkanal 3 umfasst die erste Filtervorrichtung 5 einen ersten Einlasskanal 7, eine erste Filterkammer 8, ein durch die erste Filterkammer 8 hindurchgeführtes bandförmiges erstes Filterelement 9, eine erste Klemmeinheit 10 und einem ersten Auslasskanal 11. Das Filterelement 9 kann auch als Bandfilter oder Filterband bezeichnet werden. Gleiches gilt auch für das nachfolgend noch beschriebene zweite Filterelement 16. Der erste Einlasskanal 7 steht seinerseits mit dem gemeinsamen Zufuhrkanal 3 in Strömungsverbindung. Der erste Auslasskanal 11 schließt an die erste Filterkammer 8 an und steht mit dem gemeinsamen Abfuhrkanal 4 in Strömungsverbindung. Weiters ist noch angedeutet, dass das erste Filterelement 9 in Verstellrichtung des ersten Filterelements 9 gesehen beidseits der ersten Filterkammer 8 mittels einer ersten und zweiten Klemmvorrichtung 12, 13 der ersten Klemmeinheit 10 bedarfsweise geklemmt gehalten ist oder wird.

Ebenfalls ausgehend vom gemeinsamen Zufuhrkanal 3 ist die zweite Filtervorrichtung 6 vorgesehen oder angeordnet, welche nachfolgend in Strömungsrichtung gesehen, ebenfalls in den gemeinsamen Abfuhrkanal 4 einmündet und mit diesem in Strömungsverbindung steht. Die zweite Filtervorrichtung 6 umfasst einen zweiten Einlasskanal 14, eine zweite Filterkammer 15, ein durch die zweite Filterkammer 15 hindurchgeführtes bandförmiges zweites Filterelement 16, eine zweite Klemmeinheit 17 und einen zweiten Auslasskanal 18. Es steht der zweite Einlasskanal 14 mit dem gemeinsamen Zufuhrkanal 3 in Strömungsverbindung und es steht der zweite Auslasskanal 18 mit dem gemeinsamen Abfuhrkanal 4 in Strömungsverbindung. Zur beidseitigen Klemmung des zweiten Filterelements 16 in dessen Verstellrichtung gesehen, umfasst die zweite Klemmeinheit 17 eine eigene dritte Klemmvorrichtung 19 und eine vierte Klemmvorrichtung 20. Mittels der beiden Klemmvorrichtung 19, 20 der zweiten Klemmeinheit 17 ist auch das zweite Filterelement 16 beidseits der zweiten Filterkammer 15 bedarfsweise klemmbar bzw. kann dieses bedarfsweise geklemmt gehalten werden. Dies erfolgt bei im Filtrationsbetrieb befindlicher zweiter Filtervorrichtung 6.

Die bereitgestellte und zu filtrierende Flüssigkeit und/oder Schmelze wird für den Filtrationsvorgang dem gemeinsamen Zufuhrkanal 3 zugeleitet, wobei je nach gewählter Betriebsart der Filtrationsanlage 1 die Flüssigkeit und/oder Schmelze durch zumindest eine der Filtervorrichtungen 5, 6 hin zum gemeinsamen Abfuhrkanal 4 weitergefördert und dabei gefiltert wird. Zumeist erfolgt dies mittels eines Förderdrucks, der z.B. von einem Extruder und/oder einer Schmelzepumpe aufgebaut wird.

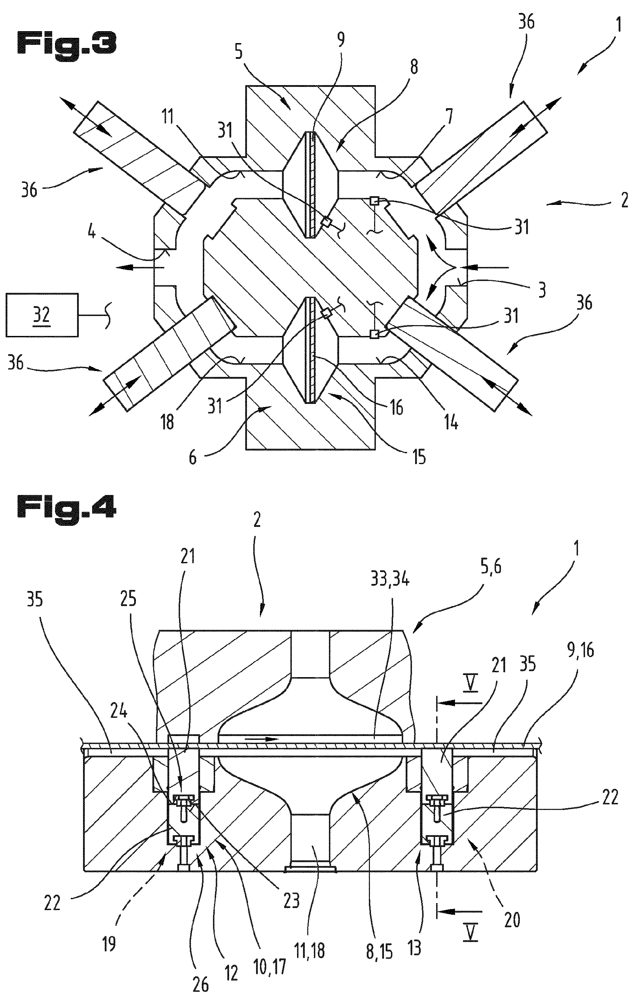

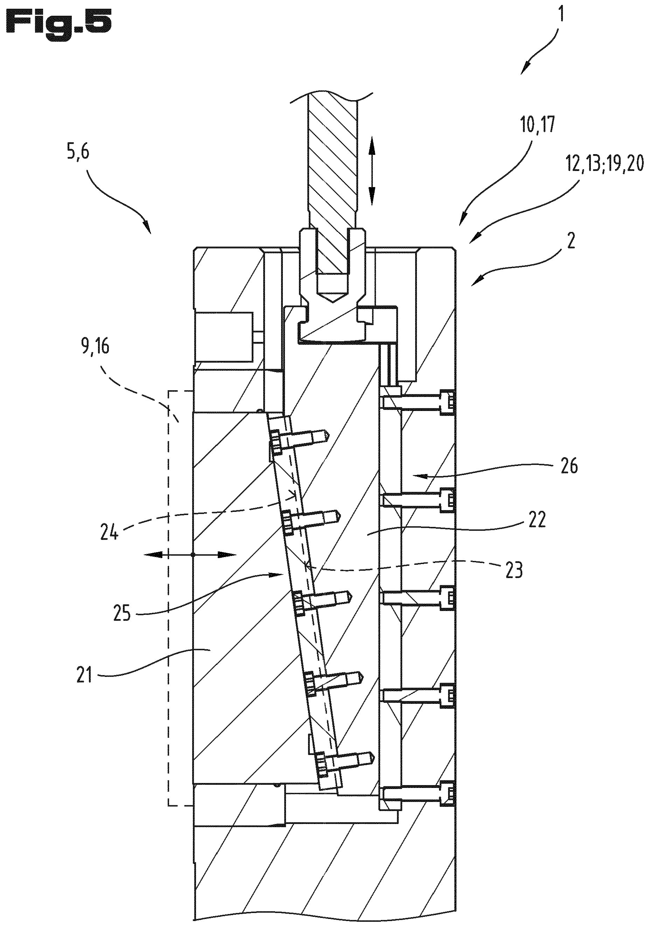

Nachfolgend werden die beiden Klemmvorrichtungen 12, 13 der ersten Klemmeinheit 10 und die beiden Klemmvorrichtungen 19, 20 der zweiten Klemmeinheit 17 gemeinsam beschrieben, da diese jeweils den gleichen Aufbau aufweisen. Deshalb werden insbesondere in den Fig. 4 und 5 stets gleiche Bauteilkomponenten auch jeweils mit dem gleichen Bezugszeichen versehen.

Bei diesem gezeigten Ausführungsbeispiel umfasst jede der Klemmvorrichtungen 12, 13 der ersten Klemmeinheit 10 und jede der beiden Klemmvorrichtungen 19, 20 der zweiten Klemmeinheit 17 jeweils ein Klemmelement 21 und ein damit zusammenwirkendes Stellelement 22. Jedes der Klemmelemente 21 ist oder wird in einer Normalrichtung auf eine Flachseite des jeweiligen Filterelements 9, 16 relativ bezüglich des Gehäuses 2 verstellbar geführt und ist weiters in einer Querausrichtung bezüglich der Verstellrichtung oder der Längserstreckung des jeweiligen Filterelements 9, 16 angeordnet. Die jeweilige Flachseite des Filterelements 9, 16 ist jene, welche auch die Filterfläche in der jeweiligen Filtervorrichtung 5, 6 definiert.

Weiters ist oder wird jedes der Stellelemente 22 in einer parallelen Richtung bezüglich der Flachseite des jeweiligen Filterelements 9, 16 relativ bezüglich des Gehäuses 2 verstellbar geführt und ist ebenfalls in einer Querausrichtung bezüglich der Verstellrichtung des jeweiligen Filterelements 9, 16 dazu verlaufend angeordnet. Weiters ist noch vorgesehen, dass die jeweils miteinander zusammenwirkenden Klemmelemente 21 und Stellelemente 22 an deren jeweils einander zugewendeten Seiten zusammenwirkende Kontaktflächen aufweisen. Die Klemmelemente 21 weisen jeweils eine Klemmelement-Kontaktfläche 23 auf und die und Stellelemente 22 weisen jeweils eine dazu gegengleich verlaufend ausgerichtete Stellelement-Kontaktfläche 24 auf. Die jeweiligen Klemmelement-Kontaktflächen 23 und die Stellelement-Kontaktflächen 24 weisen weiters eine schräg verlaufende Längsausrichtung bezüglich der Flachseite des jeweiligen Filterelements 9, 16 auf. Zur gegenseitigen Abstützung und Kraftübertragung liegt jeweils eine Klemmelement-Kontaktfläche 23 an einer dieser gegenüberliegend angeordneten Stellelement-Kontaktfläche 24 an.

Die Klemmelement-Kontaktfläche 23 und/oder die Stellelement-Kontaktflächen 24 können gehärtet sein, und/oder mit gehärteten Einsätzen versehen sein, um den Verschleiß im Betrieb zu reduzieren.

An den jeweils voneinander abgewendeten Seiten der jeweils zusammenwirkenden Klemmelemente 21 und Stellelemente 22 weisen diese jeweils bevorzug parallel zueinander verlaufende Stirnflächen auf. Jene Stirnfläche der Klemmelemente 21 ist stets dem jeweiligen Filterelement 9, 16 zugewendet und dient zu dessen Klemmung gegen das Gehäuse 2. Diese kann auch als Klemmfläche bezeichnet werden. Jene Stirnfläche der Stellelemente 22 ist an der davon abgewendeten Seite am jeweiligen Stellelement 22 angeordnet und ist bedarfsweise am Gehäuse 2 abstützbar.

Bei einer relativen Verstellung des Stellelements 22 in Richtung einer ersten Verstellrichtung bezüglich des damit zusammenwirkenden Klemmelements 21 ist oder wird das Klemmelement 21 in eine am jeweiligen Filterelement 9, 16 anliegende Klemmstellung gegen das Gehäuse 2 gedrückt. Bei einer bezüglich der ersten Verstellrichtung dazu entgegengesetzten zweiten Verstellrichtung des Stellelements 22 ist oder wird das damit zusammenwirkende Klemmelement 21 in eine Freigabestellung für das jeweilige Filterelement 9, 16 verstellt. Dies durch die gewählte keilförmige Ausbildung der jeweiligen Klemmelemente 21 und Stellelemente 22 an deren einander zugewendeten Seiten. Die beiden Verstellrichtungen der Stellelemente 22 sowie der Klemmelemente 21 sind jeweils mit einem Doppelpfeil angedeutet. Die Verstellung der Klemmelemente 21 wird durch die relative Verstellung der Stellelemente 22 bewirkt, wobei die jeweiligen Verstellrichtungen in einer Normalebene auf die Flachseite des jeweiligen Filterelements 9, 16 verlaufen sowie zueinander einen Winkel von in etwa 90° zueinander einschließen. Die Kraftübertragung ausgehend vom jeweiligen Stellelement 22 auf das damit zusammenwirkende Klemmelement 21 erfolgt mittels einer Druckkraft. Bei einem gegengleich gewählten Steigungsverlauf der jeweiligen Stellelemente 22 sowie der Klemmelemente 21 erfolgt dies mittels einer Zugkraft. Die jeweils aufgebrachte Stellkraft wird um einen Winkel von 90° umgelenkt.

Um eine sichere Verstellbewegung der Klemmelemente 21 in beiden Verstellrichtungen zu ermöglichen, sollen die jeweils miteinander zusammenwirkenden Klemmelemente 21 und Stellelemente 22 im Bereich von deren jeweils einander zugewendeten Klemmelement-Kontaktflächen 23 und Stellelement-Kontaktflächen 24 mittels einer ersten Führungsanordnung 25 längsverschieblich aneinander gehalten und geführt sein oder werden. Dies kann z.B. mittels einer T-Nutführung oder ähnlichen Führungsanordnungen realisiert werden. Um auch die einzelnen Stellelemente 22 in einer geradlinig verlaufenden Verstellrichtung am Gehäuse 2 führen zu können, können die jeweiligen Stellelemente 22 an deren vom jeweiligen Filterelement 9, 16 abgewendeten Seite mittels einer zweiten Führungsanordnung 26 längsverschieblich am Gehäuse 2 gehalten und geführt werden oder sein. Dies kann ebenfalls z.B. mittels einer T-Nutführung oder ähnlichen Führungsanordnungen realisiert werden.

Um im Bereich der einzelnen Klemmelemente 21 zumindest in deren anliegenden Klemmstellung am jeweiligen Filterelement 9, 16 einen ungewollten Austritt der Flüssigkeit und/oder Schmelze aus der jeweiligen Filterkammer 8, 15 zu unterbinden oder weitgängig zu verhindern, sollen die die Klemmelemente 21 in Ansicht auf deren dem jeweiligen Filterelement 9, 16 zugewendeten Klemmfläche umfänglich durchgängig gegen das Gehäuse 2 abgedichtet sein. Dazu können nicht näher bezeichnete Dichtelemente vorgesehen sein oder werden. Damit kann bei sich in der Klemmstellung befindlichen Klemmelementen 21 die jeweilige Filterkammer 8, 15 gegen das Gehäuse 2 abgedichtet sein oder werden.

Auf die nähere Darstellung von Verstellmitteln oder Stellantrieben für die jeweiligen Stellelemente 22 wurde der besseren Übersichtlichkeit halber verzichtet. Es sei angemerkt, dass dazu alle aus dem bekannten Stand der Technik geeignete Vorrichtungen eingesetzt werden können wie z.B. Zylinder-Kolbenanordnungen, elektrische Stellantriebe, Linearantriebe oder dergleichen. Bevorzugt wird jedem der einzelnen Stellelemente 22 sowohl der ersten Klemmeinheit 10 als auch der zweiten Klemmeinheit 17 jeweils ein eigenes Stellmittel oder ein eigener Stellantrieb zugeordnet, welches oder welcher mit dem jeweiligen Stellelement 22 in Antriebsverbindung steht. Damit wird die Möglichkeit geschaffen, dass jede Klemmvorrichtungen 12, 13; 19, 20 der Klemmeinheiten 10, 17, insbesondere jedes von deren Stellelementen 22, unabhängig voneinander zwischen deren Klemmstellung und deren Freigabestellung verstellt werden kann.

Bei einem stationären Filterbetrieb oder Filtrationsbetrieb der Filtrationsanlage 1, nicht jedoch bei der Erneuerung der aktiven Filterfläche, wird in einem der Einlasskanäle 7 oder 14 stets zumindest ein Anteil von 10% der Flüssigkeit und/oder Schmelze hindurch gefördert. In dem anderen der Einlasskanäle 14 oder 7 wird der verbleibende Anteil auf 100% der Flüssigkeit und/oder Schmelze hindurch gefördert. Bei dem zuvor angegebenen Anteil von 10% der Flüssigkeit und/oder Schmelze sind dies 90%. Dies ausgehend vom gemeinsamen Zufuhrkanal 3. Die Angabe des Anteils an Flüssigkeit und/oder Schmelze kann sich auf den Massenstrom oder den Volumenstrom beziehen.

Durch diesen gewählten Mindestanteil an Flüssigkeit und/oder Schmelze kann ein Verklumpen oder Verfestigen derselben verhindert werden. Weiters kann so aber auch jener Zeitpunkt zueinander zwischen den beiden Filtervorrichtungen 5 und 6 versetzt werden, zu welchem ein Erneuern oder Wechseln des jeweiligen Filterelements 9, 16 durchzuführen ist. In der Fig. 3 ist gezeigt, dass der hier oben dargestellten ersten Filtervorrichtung 5 der gesamte Strom oder die gesamte Menge an Flüssigkeit und/oder Schmelze zugeleitet wird und bei der hier unterhalb dargestellten zweiten Filtervorrichtung 6 die Zufuhr der Flüssigkeit und/oder Schmelze vollständig unterbunden ist. Dies wird nachfolgend noch näher erläutert.

Bei einem Erneuern der aktiven und im Filterbetrieb befindlichen Filterfläche von einem der Filterelemente 9, 16 sollen folgende Schritte durchgeführt werden:
- Verringern des zugeführten Anteils an Flüssigkeit und/oder Schmelze in die jeweilige Filterkammer 8, 15 bis auf maximal 2% des gesamten Massenstroms/Volumenstroms oder vollständiges Unterbinden der Zufuhr an Flüssigkeit und/oder Schmelze in die jeweilige Filterkammer 8, 15,
- Verstellen der jeweiligen Klemmvorrichtungen 12, 13; 19, 20 der jeweiligen Klemmeinheit 10, 17 in deren Freigabestellung,
- Hindurchbewegen des jeweiligen Filterelements 9, 16 in dessen Verstellrichtung um einen vorbestimmten Verstellweg durch die jeweilige Filterkammer 8, 15,
- Verstellen von einer der beiden Klemmvorrichtungen 12, 13; 19, 20 der jeweiligen Klemmeinheit 10, 17 in deren Klemmstellung,
- Vorspannen des jeweiligen Filterelements 9, 16 mit einer vorbestimmten Zugkraft in Richtung auf die andere der beiden Klemmvorrichtungen 13, 12; 20, 19 der jeweiligen Klemmeinheit 17, 10,
- Verstellen der anderen der beiden Klemmvorrichtungen 13, 12; 20, 19 der jeweiligen Klemmeinheit 17,10 in deren Klemmstellung, und
- Freigabe der Zufuhr der Flüssigkeit und/oder Schmelze in die jeweilige Filterkammer 8, 15 mit der erneuerten Filterfläche des jeweiligen Filterelements 9, 16.

Um unnötige Wiederholungen in der Beschreibung zu vermeiden, wurde der Erneuerungsvorgang der jeweils aktiven Filterfläche für jeweils beide der Filtervorrichtungen 5 und 6 beschrieben. Das Erneuern der aktiven Filterfläche wird wahlweise nur bei jeweils einer der Filtervorrichtung 5 oder 6 durchgeführt, um so einen gleichmäßigen Massestrom oder einen gleichmäßigen Volumenstrom an filtrierter Flüssigkeit und/oder Schmelze am gemeinsamen Abfuhrkanal 4 abgeben oder bereitstellen zu können.

Da je nach gewählter Verstellrichtung des jeweiligen Filterelements 9, 16 zuerst an einer Seite der jeweiligen Filterkammer 8, 15 zuerst die Klemmung des jeweiligen Filterelements 9, 16 erfolgt, kann das jeweilige Filterelement 9, 16 mit einer vorbestimmten Vorspannkraft und somit auf Zug beaufschlagt werden. Dazu soll weiters die auf das jeweilige Filterelement 9, 16 beim Erneuern von dessen aktiven Filterfläche aufgebrachte Zugkraft ermittelt und/oder überwacht werden.

Es wird darauf hingewiesen, dass die von den Klemmvorrichtungen 12, 13; 19, 20 aufgebrachte Kraft von der Verschmutzung der zu filternden Flüssigkeit und/oder Schmelze abhängen kann. Diese Kraft kann für die beiden Filtervorrichtungen unterschiedlich sein. Die Zugspannung, die dadurch entsteht, dass die zu filternde Flüssigkeit und/oder Schmelze auf die Filtervorrichtung drückt, kann gemessen werden, und so die aufzubringende Kraft angepasst werden. Vorteilhaft hierbei ist, da durch den angepassten Druck die Filteroberfläche komplett parallel zur Querschnittsfläche der zu filternden Flüssigkeit und/oder Schmelze gehalten werden kann, müssen die Klemmelemente 21 nur sehr wenig geöffnet werden, um die jeweiligen Filterelemente 9, 16 zu bewegen. Das verringert insbesondere bei sehr flüssigen Materialen den Austritt von Material aus den Filterkammern 8, 15. Die Zugspannung der jeweiligen Filterelemente 9, 16 kann somit sehr genau kontrolliert werden.

Dabei können die Klemmelemente 21 in ihrer Position so angesteuert werden, dass deren Öffnungsweg gerade so groß ist, dass die Filterfläche durch die entstehende Öffnung gezogen werden kann. Dabei kann ab einem im festgelegten Punkt der Filterfläche, z.b. mit Beginn des letzten Drittels der verunreinigten Filterfläche, der Öffnungsweg, bzw. die Öffnung, vergrößert, um alle Verunreinigungen mit aus der Filterkammer entfernen zu können. Diese Ansteuerung hat gerade bei niedrigviskosen Flüssigkeiten den Vorteil, dass während des Filterflächenwechsels nur wenig Material aus dem System entweicht.

Eine weitere verbesserte Ansteuerung liegt darin, dass der Öffnungsweg der Klemmelemente 21 in Wellenform erfolgt, d.h. dass der Öffnungsspalt alternierend, d.h. abwechselnd, zwischen kleinstmöglicher Öffnung und größter Öffnung hin und her geschalten wird. In der Fig. 1 ist noch dargestellt, dass bei jeder der Filtervorrichtungen 5 und 6 der Filtrationsanlage 1 eine erste Heizvorrichtung 27 und 28 für jedes der Filterelement 9, 16 vorgesehen sein kann. Die ersten Heizvorrichtungen 27 und 28 sind in Verstellrichtung des jeweiligen Filterelements 9, 16 gesehen, der jeweiligen Filterkammer 8, 15 vorgeordnet. Damit wird die Möglichkeit geschaffen, das jeweilige Filterelement 9, 16, insbesondere vor dem Erneuern von dessen aktiven Filterfläche, vor dem Zuführen in die jeweilige Filterkammer 8, 15 auf einen Temperaturwert ausgewählt aus einem Temperatur-Wertebereich mit einer unteren Grenze von 20 °C über Raumtemperatur, insbesondere Aufschmelztemperatur der jeweiligen Schmelze, und einer oberen Grenze von 400 °C, insbesondere der jeweiligen Verarbeitungstemperatur bzw. geringfügig über der jeweiligen Verarbeitungstemperatur, zu erwärmen. Durch diese Vorerwärmung erfolgt bei der neuerlichen Inbetriebnahme der jeweiligen Filtervorrichtung 5, 6 keine Abkühlung der zu filternden Flüssigkeit und/oder Schmelze beim Erstkontakt mit der erneuerten Filterfläche.

Weiters kann es vorteilhaft sein, wenn bei jeder der Filtervorrichtungen 5 und 6 der Filtrationsanlage 1 eine zweite Heizvorrichtung 29 und 30 für jedes der Filterelemente 9 und 16 vorgesehen ist. Die zweiten Heizvorrichtungen 29 und 30 sind in Verstellrichtung des jeweiligen Filterelements 9, 16 gesehen, der jeweiligen Filterkammer 8, 15 nachgeordnet. Damit wird die Möglichkeit geschaffen, das jeweilige Filterelement 9, 16, insbesondere nach dem Erneuern von dessen aktiven Filterfläche, nach dem Hindurchführen durch die jeweilige Filterkammer 8, 15 auf einen Temperaturwert ausgewählt aus einem Temperatur-Wertebereich mit einer unteren Grenze von 20 °C über Raumtemperatur, insbesondere Aufschmelztemperatur der jeweiligen Schmelze, und einer oberen Grenze von 400 °C, insbesondere der jeweiligen Verarbeitungstemperatur bzw. geringfügig über der jeweiligen Verarbeitungstemperatur erwärmt wird, erwärmen zu können. Damit kann eine zu rasche Abkühlung und Erstarrung des jeweiligen Filterelements 9, 16 vor dem Aufwickeln desselben verhindert werden.

Auch hierbei kann die bereits zuvor beschriebene Erwärmung der auslaufenden Filterfläche eingesetzt werden, so dass noch anhaftendes Material im schmelzflüssigen Zustand verbleibt und nach unten abfließen kann. Des Weiteren kann das Abfließen des Materials durch Anbringung eines Abstreifers und Führung der Filterfläche über diesen Abstreifer unterstützt werden.

Um die jeweilig herrschenden Druckverhältnisse der Flüssigkeit und/oder Schmelze in jeder der Filtervorrichtungen 5 und 6 ermitteln zu können, kann in jedem der Einlasskanäle 7 und 14 jeweils zumindest ein eigener Drucksensor 31 angeordnet sein oder werden. Es wäre aber auch möglich, jeweils einen eigenen Drucksensor 31 in jeder der Filterkammern 8 und 15 auf der dem jeweiligen Einlasskanal 7, 14 zugewendeten Seite vorzusehen oder anzuordnen. Der Einfachheit halber werden alle Drucksensoren 31 mit dem selben Bezugszeichen versehen. Durch dieses Vorsehen kann so der in der Flüssigkeit und/oder Schmelze aufgebaute Druck ermittelt werden und an eine Steuerungsvorrichtung 32 übertragen oder weitergeleitet werden. Aufgrund der ermittelten Druckverhältnisse kann festgelegt werden, bei welchem ein Wechsel der aktiven Filterfläche bei der jeweiligen Filtervorrichtung 5 oder 6 durchzuführen ist.

In Abhängigkeit vom jeweils ermittelten Druckniveau kann ein Rückschluss auf den Zustand und die Verschmutzung des jeweiligen Filterelements 9, 16 getroffen werden. Je mehr an Partikeln aus der Flüssigkeit und/oder Schmelze von dem jeweiligen Filterelement 9, 16 heraus gefiltert und so am Filterelement 9, 16 abgelagert worden sind, desto mehr sinkt die Durchtrittsrate der Flüssigkeit und/oder Schmelze durch das Filterelement 9, 16 und der Druck vor dem jeweiligen Filterelement 9, 16 steigt an oder nimmt zu. Bei einem vorbestimmten Druckniveau in der jeweiligen Filtervorrichtung 5, 6 ist der zuvor beschriebene Wechsel oder das Erneuern der aktiven Filterfläche durchzuführen.

Handelt es sich bei der zu filtrierenden Flüssigkeit und/oder Schmelze um eine mit einer sehr geringen Viskosität, wie z.B. um ein Sekundär-Kunststoffmaterial wie etwa PET-C, kann auf die Abstützung des jeweiligen Filterelements 9, 16 in der jeweiligen Filterkammer 8, 15 verzichtet werden. Es wäre aber auch eine Anordnung oder ein Vorsehen von einem ersten Stützelement 33 bei der ersten Filtervorrichtung 5 und/oder von einem zweiten Stützelement 34 bei der zweiten Filtervorrichtung 6 denkbar und möglich. Das jeweilige Stützelement 33, 34 ist in bekannter Weise von Durchtrittsöffnungen durchsetzt, durch welche die gefilterte Flüssigkeit und/oder Schmelze in Richtung zum gemeinsamen Abfuhrkanal 4 weiterströmt. Weiters wäre es noch möglich, das Stützelement 33, 34 als Stützsieb auszubilden. **In** diesem Fall wäre es denkbar, das als Stützsieb ausgebildete Stützelement 33, 34 ortsfest bezüglich der jeweiligen Filterkammer 8, 15 anzuordnen. Unabhängig davon könnte aber auch das Stützsieb bei jedem Filterwechsel mit dem jeweiligen Filterelement 9, 16 mitbewegt werden.

Es wäre auch noch möglich, das jeweilige Filterelement 9, 16 einlagig oder auch mehrlagig auszubilden. Damit kann z.B. die dem Zufuhrkanal 3 näherliegende Filterlage oder Filterschicht etwas grobporiger ausgebildet sein, um so Verschmutzungen mit einer größeren Partikelgröße herauszufiltern. Die in Strömungsrichtung nachfolgend angeordnete weitere Filterlage oder Filterschicht ist feinporiger auszuführen, um so auch jene Verschmutzungen mit einer kleineren Partikelgröße auffangen und zurückhalten zu können. Auf die nähere Beschreibung von einer Abspulvorrichtung und einer Aufspulvorrichtung wurde verzichtet. Diese können gemäß dem bekannten Stand der Technik ausgewählt und eingesetzt werden.

Wie zuvor für das Erneuern von einer der aktiven Filterflächen beschrieben, wird stets ein minimaler Anteil an Flüssigkeit und/oder Schmelze weiterhin der Filterkammer 8, 15 zugeleitet. Dies auch bei geöffneten Klemmvorrichtungen 12, 13 oder 19, 20. Um eine Ableitung der weiterhin zugeförderten Flüssigkeit und/oder Schmelze aus der jeweiligen Filterkammer 8, 15 und der jeweils sich nicht in der Klemmstellung befindlichen Klemmvorrichtung 12 und/oder 13 und/oder 19 und/oder 20 zu ermöglichen, ist zumindest ein eigener Ableitungskanal 35 im Gehäuse 2 vorzusehen. Der Einfachheit halber wurde für jeden der Ableitungskanäle 35 dasselbe Bezugszeichen verwendet. So kann nach dem Öffnen der jeweils eine Klemmeinheit 10, 17 bildenden Klemmvorrichtungen 12, 13 oder 19, 20 der minimale Anteil an Flüssigkeit und/oder Schmelze zwischen dem jeweiligen Klemmelement 21 und dem Filterelement 9 oder 16 abströmen.

Wie in der schematischen Darstellung der Fig. 3 weiters noch angedeutet ist, ist in jedem der Einlasskanäle 7, 14 sowie in jedem der Auslasskanäle 11, 18 jeweils ein eigenes Stellorgan 36 vorgesehen, um so den jeweiligen Anteil der Flüssigkeit und/oder Schmelze zu den jeweiligen Filterkammern 8, 15 einstellen und steuern zu können. Die Verstellrichtung ist bei jedem der Stellorgane 36 mit einem Doppelpfeil angedeutet. Es ist hier dargestellt, dass die erste Filtervorrichtung 5 voll im Filterbetrieb ist und die zweite Filtervorrichtung 6 außer Filterbetrieb ist. In dieser Stellung der Stellorgane 36 wird der ersten Filtervorrichtung 5 ein Anteil von knapp 100% oder der gesamte Anteil von 100% an Flüssigkeit und/oder Schmelze zugeleitet und entweder nur ein geringer Anteil von wenigen Prozent während dem Erneuern der aktiven Filterfläche, hier des zweiten Filterelements 16, zugeleitet.

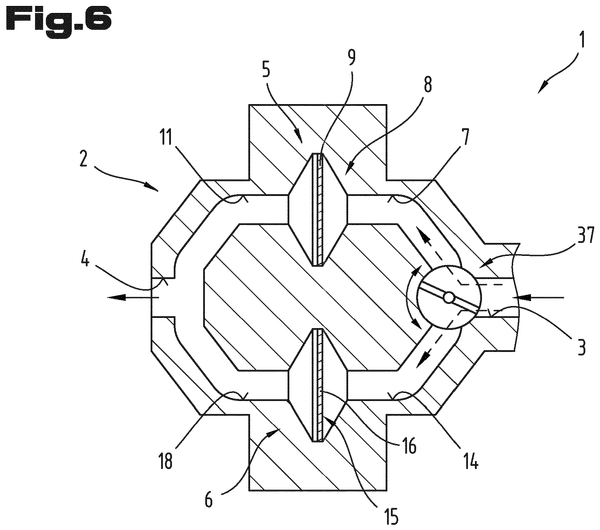

In der Fig. 6 ist eine weitere und gegebenenfalls für sich eigenständige Ausführungsform der Filtervorrichtungen 5 und 6 mit deren Kanalverlauf zur Bildung der Filtrationsanlage 1 schematisch vereinfacht gezeigt, wobei wiederum für gleiche Teile gleiche Bezugszeichen bzw. Bauteilbezeichnungen wie in den vorangegangenen Fig. 1 bis 5 verwendet werden. Um unnötige Wiederholungen zu vermeiden, wird auf die detaillierte Beschreibung in den vorangegangenen Fig. 1 bis 5 hingewiesen bzw. Bezug genommen.

Im Gegensatz zu der in der Fig. 3 dargestellten Variante ist hier bereits im Zufuhrkanal 3 im Übergangsabschnitt zu den Einlasskanälen 7, 14 ein Stellventil 37 vorgesehen, mittels welchem je nach Stellung desselben der Massenstrom oder der Volumenstrom der zu filternden Flüssigkeit und/oder Schmelze anteilsmäßig eingestellt den Filtervorrichtungen 5 und/oder 6 zugeleitet werden kann. Die Ansteuerung kann mittels der Steuerungsvorrichtung 32 erfolgen, um die entsprechende Schaltstellung und anteilsmäßige Aufteilung der Flüssigkeit und/oder Schmelze einzustellen. Die Darstellung des Stellventils 37 ist rein schematisch gewählt und kann frei nach dem bekannten Stand der Technik gewählt werden. Weiters ist mittels Pfeilen angedeutet, dass bei dieser gewählten Schaltstellung der größte Anteil an Flüssigkeit und/oder Schmelze der ersten Filtervorrichtung 5 und ein eher geringer Anteil der zweiten Filtervorrichtung 6 zugeleitet wird.

Wie bereits dargelegt, kann die Ansteuerung des Stellventils 37 mittels der Steuerungsvorrichtung 32 erfolgen. Alternativ oder zusätzlich können die Stellorgane 36 durch die Steuerungsvorrichtung 32 angesteuert werden. Sowohl durch das Stellventil 37 als auch durch die Stellorgane 36, einzeln oder zusammen, können der Massenstrom oder der Volumenstrom der zu filternden Flüssigkeit und/oder Schmelze eingestellt werden.

Zu beachten ist, dass, falls das Stellventil 37 als einfaches Verteilerventil ausgestaltet ist, sich durch Betätigung des Stellventils 37 lediglich die Verteilung der durch den Zufuhrkanal 3 zufließenden Flüssigkeit und/oder Schmelze auf die beiden dahinter liegenden Einlasskanäle 7, 14 verändern lässt. Der Gesamtdruck bleibt hierbei gleich, d.h. die am Zufuhrkanal 3 mit einem Druck p eintreffende Flüssigkeit und/oder Schmelze wird durch das Stellventil 37 auf die Einlasskanäle 7, 14 verteilt, wobei die Summe der in den Einlasskanälen 7, 14 herrschenden Drücke p₁ und p₂ wiederum den Druck p ergibt. Idealerweise besitzt das Stellventil 37 die Möglichkeit, den Zufluss zu jedem der beiden Einlasskanäle 7, 14 individuell zu stoppen.

Durch die Verschmutzung der Filtervorrichtungen 5, 6 verändert sich die Durchflussgeschwindigkeit der zu filternden Flüssigkeit und/oder Schmelze, und damit auch der Druck in dem jeweiligen Abschnitt der Filtrationsanlage 1. Um einen optimalen Durchfluss zu erhalten, kann durch Betätigung des Stellventils 37 der Druck von einem Einlasskanal 7 oder 14 und den dahinter liegenden Teilen der Filtrationsanlage 1 reduziert werden. Überhöhter Druck könnte sowohl die Filtervorrichtungen 5, 6 als auch andere Teile der Filtrationsanlage 1 beschädigen, und sind daher zu vermeiden.

Alternativ oder zusätzlich können zu dem Stellventil 37 auch Stellorgane 36, die unabhängig voneinander den Druck in jedem der Einlasskanäle 7, 14 und/oder in jedem der Auslasskanäle 11, 18 verändert werden. Wird nur das Stellorgan 36 im Einlasskanal 7 oder 14 geschlossen, reduziert sich der Druck nach dem entsprechenden Stellorgan 36, also z.B. auf die Filtervorrichtung 5 oder 6 und in der Filterkammer 8 oder 15. Wird dagegen nur das Stellorgan 36 im Auslasskanal 11 oder 18 geschlossen, erhöht sich der Druck vor dem entsprechenden Stellorgan 36.

Durch das Schließen bzw. Öffnen der Stellorgane 36 kann auch ein Verringern des zugeführten Anteils an Flüssigkeit und/oder Schmelze in die jeweilige Filterkammer 8, 15 bewirkt werden. Gleichfalls kann diese Verringerung durch ein Stellventil 37 im Übergangsabschnitt zu den Einlasskanälen 7, 14 bewirkt werden.

Alternativ zu einer manuellen Betätigung der Stellorgane 36 und/oder des Stellventils 37 kann auch die Steuerungsvorrichtung 32 dazu eingerichtet sein, die Stellorgane 36 und/oder das Stellventil 37 anzusteuern

Wir vorstehend dargelegt, können in der Filtrationsanlage 1 auch Drucksensoren 31 angeordnet sein. Solche Drucksensoren 31 können in jedem der Einlasskanäle 7 und 14, in jeder der Filterkammern 8 und 15 auf der dem jeweiligen Einlasskanal 7, 14 zugewendeten Seite oder auch in anderen Teilen der Filtrationsanlage 1, wie beispielsweise vor dem Zufuhrkanal 3, nach dem Abfuhrkanal 4, in einem oder beiden der Auslasskanäle 11, 18, etc. angeordnet oder vorgesehen sein.

Die Steuerungsvorrichtung 32 kann dazu eingerichtet sein, die durch die Drucksensoren 31 ermittelten Drücke zu überwachen. Die Steuerungsvorrichtung 32 kann weiters dazu eingerichtet sein, die Stellorgane 36 und/oder das Stellventil 37 so anzusteuern, dass die Drücke innerhalb vorbestimmter Grenzen bleiben.

Beispielhafte Grenzen, die zu beachten sind, sind z.B. maximale oder minimale Drücke in Zufuhrkanal 3, Abfuhrkanal 4, Einlasskanäle 7, 14, Auslasskanäle 11, 18 und Filtervorrichtungen 5, 6.

Eine weitere Option ist, dass die Steuerungsvorrichtung 32 mithilfe maschinellen Lernens die Stellorgane 36 und/oder das Stellventil 37 derart ansteuert, dass besonders hohe Drücke, z.B. Druckspitzen, gar nicht auftreten. Hierzu kann ein trainiertes Modell verwendet werden, aber auch ein selbstlernendes, d.h. selbsttrainierendes Modell, das auf der Grundlage der durch die verschiedenen Drucksensoren 31 ermittelten Drücke, Werkstoffparameter der zu verarbeitenden Flüssigkeit und/oder Schmelze, und Stellparameter der Stellorgane 36 und/oder des Stellventiles 37, erkennt oder lernt zu erkennen, wie sich die Druckverläufe an den einzelnen Drucksensoren 31 entwickeln, bevor es zu einer Druckspitze kommt. Hier kann die Steuerungsvorrichtung 32, dann bereits am Anfang einer solchen Entwicklung proaktiv die Stellorgane 36 und/oder das Stellventil 37 so anzusteuern, dass die Drücke innerhalb vorbestimmter Grenzen bleiben, d.h. Druckspitzen gar nicht erst auftreten können.

Dies ist besonders vorteilhaft, da solche Druckspitzen üblicher Weise sehr schnell auftreten, d.h. ein normales Erfassen der Drücke und reagieren auf einen Druckanstieg reicht in solchen Fällen nicht aus, um das Auftreten von Druckspitzen zu vermeiden. Eine Steuerungsvorrichtung 32, die mithilfe maschinellen Lernens die Drücke überwacht, kann aber lernen zu erkennen, wie sich die Druckverläufe entwickeln, bevor die drastischen Anstiege in einem der Drücke entstehen, und so schon vorher durch das Ansteuern der Stellorgane 36 und/oder des Stellventils 37, das Ansteigen eines Druckes vermeiden.

Wie bereits oben ausgeführt kann die Flüssigkeit und/oder Schmelze beispielsweise ein Polymer, insbesondere ein Kunststoff, und/oder ein pastöses Material sein. Das Material kann weiters insbesondere etwa das oben detailliert beschriebene aufgeschmolzene Sekundär-Kunststoffmaterial sein.

Abschließend sei noch erwähnt, dass die einzelnen Verfahrensschritte und deren zeitliche Abfolge nicht zwingend in der angeführten Reihenfolge erfolgen müssen, sondern auch eine davon abweichende zeitliche Abfolge möglich ist. Bevorzugt erfolgt jedoch eine sukzessive und somit aufeinander folgende zeitliche Abfolge der angeführten Verfahrensschritte.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeiehenaufstellung

| | | | |
|---|---|---|---|
| 1 | Filtrationsanlage | 31 | Drucksensor |
| | | 32 | Steuerungsvorrichtung |
| 2 | Gehäuse | 33 | erstes Stützelement |
| 3 | Zufuhrkanal | 34 | zweites Stützelement |
| 4 | Abfuhrkanal | 35 | Ableitungskanal |
| 5 | erste Filtervorrichtung | 36 | Stellorgan |
| 6 | zweite Filtervorrichtung | 37 | Stellventil |
| 7 | erster Einlasskanal | | |
| 8 | erste Filterkammer | | |
| 9 | erstes Filterelement | | |
| 10 | erste Klemmeinheit | | |
| 11 | erster Auslasskanal | | |
| 12 | erste Klemmvorrichtung | | |
| 13 | zweite Klemmvorrichtung | | |
| 14 | zweiter Einlasskanal | | |
| 15 | zweite Filterkammer | | |
| 16 | zweites Filterelement | | |
| 17 | zweite Klemmeinheit | | |
| 18 | zweiter Auslasskanal | | |
| 19 | dritte Klemmvorrichtung | | |
| 20 | vierte Klemmvorrichtung | | |
| 21 | Klemmelement | | |
| 22 | Stellelement | | |
| 23 | Klemmelement-Kontaktfläche | | |
| 24 | Stellelement-Kontaktfläche | | |
| 25 | erste Führungsanordnung | | |
| 26 | zweite Führungsanordnung | | |
| 27 | erste Heizvorrichtung | | |
| 28 | erste Heizvorrichtung | | |
| 29 | zweite Heizvorrichtung | | |
| 30 | zweite Heizvorrichtung | | |

## Patentansprüche

1. Verfahren zur Filtration von Flüssigkeiten und/oder Schmelzen mit darin enthaltenen Verunreinigungen, mittels einer Filtrationsanlage (1), bei dem folgende Schritte durchgeführt werden
- Bereitstellen eines Gehäuses (2) mit einem gemeinsamen Zufuhrkanal (3) und einem gemeinsamen Abfuhrkanal (4),
- Bereitstellen einer ersten Filtervorrichtung (5) mit einem ersten Einlasskanal (7), einer ersten Filterkammer (8), einem durch die erste Filterkammer (8) hindurchgeführten bandförmigen ersten Filterelement (9), einer ersten Klemmeinheit (10) und einem ersten Auslasskanal (11), wobei der erste Einlasskanal (7) mit dem gemeinsamen Zufuhrkanal (3) in Strömungsverbindung steht und der erste Auslasskanal (11) mit dem gemeinsamen Abfuhrkanal (4) in Strömungsverbindung steht, und wobei das erste Filterelement (9) in Verstellrichtung des ersten Filterelements (9) gesehen beidseits der ersten Filterkammer (8) mittels einer ersten und zweiten Klemmvorrichtung (12, 13) der ersten Klemmeinheit (10) bedarfsweise geklemmt gehalten wird,
- Bereitstellen einer zweiten Filtervorrichtung (6) mit einem zweiten Einlasskanal (14), einer zweiten Filterkammer (15), einem durch die zweite Filterkammer (15) hindurchgeführten bandförmigen zweiten Filterelement (16), einer zweiten Klemmeinheit (17) und einem zweiten Auslasskanal (18), wobei der zweite Einlasskanal (14) mit dem gemeinsamen Zufuhrkanal (3) in Strömungsverbindung steht und der zweite Auslasskanal (18) mit dem gemeinsamen Abfuhrkanal (4) in Strömungsverbindung steht, und wobei das zweite Filterelement (16) in Verstellrichtung des zweiten Filterelements (16) gesehen beidseits der zweiten Filterkammer (15) mittels einer dritten und vierten Klemmvorrichtung (19, 20) der zweiten Klemmeinheit (17) bedarfsweise geklemmt gehalten wird,
- Bereitstellen der zu filtrierenden Flüssigkeit und/oder Schmelze in einem fließfähigen Aggregatzustand und Zuleiten der Flüssigkeit und/oder Schmelze in den gemeinsamen Zufuhrkanal (3), wobei die Flüssigkeit und/oder Schmelze durch zumindest eine der Filtervorrichtungen (5, 6) hin zum gemeinsamen Abfuhrkanal (4) weitergefördert und dabei gefiltert wird,
**dadurch gekennzeichnet,**
- **dass** jede der Klemmvorrichtung (12, 13; 19, 20) der ersten Klemmeinheit (10) und der zweiten Klemmeinheit (17) jeweils ein Klemmelement (21) und jeweils ein mit diesem zusammenwirkendes Stellelement (22) umfasst,
- **dass** jedes der Klemmelemente (21) in einer Normalrichtung auf eine Flachseite des jeweiligen Filterelements (9, 16) relativ bezüglich des Gehäuses (2) verstellbar geführt wird und in einer Querausrichtung bezüglich der Verstellrichtung des jeweiligen Filterelements (9, 16) angeordnet ist,
- **dass** jedes der Stellelemente (22) in einer parallelen Richtung bezüglich der Flachseite des jeweiligen Filterelements (9, 16) relativ bezüglich des Gehäuses (2) verstellbar geführt wird und ebenfalls in einer Querausrichtung bezüglich der Verstellrichtung des jeweiligen Filterelements (9, 16) angeordnet ist,
- **dass** die Klemmelemente (21) an deren dem jeweiligen Stellelement (22) zugewendeten Seite jeweils eine Klemmelement-Kontaktfläche (23) aufweisen,
- **dass** die Stellelemente (22) an deren dem jeweiligen Klemmelement (21) zugewendeten Seite jeweils eine Stellelement-Kontaktfläche (24) aufweisen,
- **dass** die jeweils zusammenwirkenden und einander zugewendeten Klemmelement-Kontaktflächen (23) und Stellelement-Kontaktflächen (24) gegengleich zueinander verlaufend ausgerichtet sind und die jeweiligen Klemmelement-Kontaktflächen (23) und die Stellelement-Kontaktflächen (24) weiters eine schräg verlaufende Längsausrichtung bezüglich der Flachseite des jeweiligen Filterelements (9, 16) aufweisen, und
- **dass** bei einer relativen Verstellung des Stellelements (22) in Richtung einer ersten Verstellrichtung bezüglich des damit zusammenwirkenden Klemmelements (21) das Klemmelement (21) in eine am jeweiligen Filterelement (9, 16) anliegende Klemmstellung gegen das Gehäuse (2) gedrückt wird und bei einer bezüglich der ersten Verstellrichtung dazu entgegengesetzten zweiten Verstellrichtung des Stellelements (22) das damit zusammenwirkende Klemmelement (21) in eine Freigabestellung für das jeweilige Filterelement (9, 16) verstellt wird.

2. Verfahren nach Anspruch 1, **dadurch gekennzeichnet, dass** die jeweils miteinander zusammenwirkenden Klemmelemente (21) und Stellelemente (22) im Bereich von deren Klemmelement-Kontaktflächen (23) und Stellelement-Kontaktflächen (24) mittels einer ersten Führungsanordnung (25) längsverschieblich aneinander gehalten und geführt werden.

3. Verfahren nach Anspruch 1 oder 2, **dadurch gekennzeichnet, dass** die jeweiligen Stellelemente (22) an deren vom jeweiligen Filterelement (9, 16) abgewendeten Seite mittels einer zweiten Führungsanordnung (26) längsverschieblich am Gehäuse (2) gehalten und geführt werden.

4. Verfahren nach einem der vorhergehenden Ansprüche, **dadurch gekennzeichnet, dass** die Klemmelemente (21) in Ansicht auf deren dem jeweiligen Filterelement (9, 16) zugewendeten Klemmfläche umfänglich durchgängig gegen das Gehäuse (2) abgedichtet sind.

5. Verfahren nach einem der vorhergehenden Ansprüche, **dadurch gekennzeichnet, dass** jede der Klemmvorrichtungen (12, 13; 19, 20) der Klemmeinheiten (10, 17), insbesondere jedes von deren Stellelementen (22), unabhängig voneinander zwischen deren Klemmstellung und deren Freigabestellung verstellt wird.

6. Verfahren nach einem der vorhergehenden Ansprüche, **dadurch gekennzeichnet, dass** bei sich in der Klemmstellung befindlichen Klemmelementen (21) die jeweilige Filterkammer (8, 15) gegen das Gehäuse (2) abgedichtet wird.

7. Verfahren nach einem der vorhergehenden Ansprüche, **dadurch gekennzeichnet, dass** im Filterbetrieb der Filtrationsanlage (1) in einem der Einlasskanäle (7, 14) stets zumindest ein Anteil von 10% der Flüssigkeit und/oder Schmelze und im anderen Einlasskanal (14, 7) der verbleibende Anteil auf 100% der Flüssigkeit und/oder Schmelze hindurch gefördert wird.

8. Verfahren nach einem der vorhergehenden Ansprüche, **dadurch gekennzeichnet, dass** bei einem Erneuern der aktiven Filterfläche von einem der Filterelemente (9, 16) folgende Schritte durchgeführt werden
- Verringern des zugeführten Anteils an Flüssigkeit und/oder Schmelze in die jeweilige Filterkammer (8, 15) bis auf maximal 2% des gesamten Massenstroms/Volumenstroms oder vollständiges Unterbinden der Zufuhr an Flüssigkeit und/oder Schmelze in die jeweilige Filterkammer (8, 15),
- Verstellen der jeweiligen Klemmvorrichtungen (12, 13; 19, 20) der jeweiligen Klemmeinheit (10, 17) in deren Freigabestellung,
- Hindurchbewegen des jeweiligen Filterelements (9, 16) in dessen Verstellrichtung um einen vorbestimmten Verstellweg durch die jeweilige Filterkammer (8, 15),
- Verstellen von einer der beiden Klemmvorrichtungen (12, 13; 19, 20) der jeweiligen Klemmeinheit (10, 17) in deren Klemmstellung,
- Vorspannen des jeweiligen Filterelements (9, 16) mit einer vorbestimmten Zugkraft in Richtung auf die andere der beiden Klemmvorrichtungen (13, 12; 20, 19) der jeweiligen Klemmeinheit (17, 10),
- Verstellen der anderen der beiden Klemmvorrichtungen (13, 12; 20, 19) der jeweiligen Klemmeinheit (17,10) in deren Klemmstellung, und
- Freigabe der Zufuhr der Flüssigkeit und/oder Schmelze in die jeweilige Filterkammer (8, 15) mit der erneuerten Filterfläche des jeweiligen Filterelements (9, 16).

9. Verfahren nach einem der vorhergehenden Ansprüche, **dadurch gekennzeichnet, dass** das Verringern des zugeführten Anteils an Flüssigkeit und/oder Schmelze in die jeweilige Filterkammer (8, 15) durch Stellorgane (36) in jedem der Einlasskanäle (7, 14) und/oder in jedem der Auslasskanäle (11, 18) oder durch ein Stellventil (37) im Übergangsabschnitt zu den Einlasskanälen (7, 14) bewirkt wird.

10. Verfahren nach einem der vorhergehenden Ansprüche, **dadurch gekennzeichnet, dass** die Stellorgane (36) und/oder das Stellventil (37) durch eine Steuerungsvorrichtung (32) angesteuert werden.

11. Verfahren nach einem der vorhergehenden Ansprüche, **dadurch gekennzeichnet, dass** die auf das jeweilige Filterelement (9, 16) beim Erneuern von dessen aktiven Filterfläche aufgebrachte Zugkraft ermittelt und/oder überwacht wird.

12. Verfahren nach einem der vorhergehenden Ansprüche, **dadurch gekennzeichnet, dass** das jeweilige Filterelement (9, 16), insbesondere vor dem Erneuern von dessen aktiven Filterfläche, vor dem Zuführen in die jeweilige Filterkammer (8, 15) auf einen Temperaturwert ausgewählt aus einem Temperatur-Wertebereich mit einer unteren Grenze von 20 °C über Raumtemperatur, insbesondere Aufschmelztemperatur der jeweiligen Schmelze, und einer oberen Grenze von 400 °C, insbesondere der jeweiligen Verarbeitungstemperatur bzw. geringfügig über der jeweiligen Verarbeitungstemperatur, erwärmt wird.

13. Verfahren nach einem der vorhergehenden Ansprüche, **dadurch gekennzeichnet, dass** das jeweilige Filterelement (9, 16), insbesondere nach dem Erneuern von dessen aktiven Filterfläche, nach dem Hindurchführen durch die jeweilige Filterkammer (8, 15) auf einen Temperaturwert ausgewählt aus einem Temperatur-Wertebereich mit einer unteren Grenze von 20 °C über Raumtemperatur, insbesondere Aufschmelztemperatur der jeweiligen Schmelze, und einer oberen Grenze von 400 °C, insbesondere der jeweiligen Verarbeitungstemperatur bzw. geringfügig über der jeweiligen Verarbeitungstemperatur, erwärmt wird.

14. Verfahren nach einem der vorhergehenden Ansprüche, **dadurch gekennzeichnet, dass** in jedem der Einlasskanäle (7, 14) und/oder in jeder der Filterkammern (8, 15) auf der dem jeweiligen Einlasskanal (7, 14) zugewendeten Seite der in der Flüssigkeit und/oder Schmelze aufgebaute Druck durch Drucksensoren (31) ermittelt wird.

15. Verfahren nach einem der vorhergehenden Ansprüche, **dadurch gekennzeichnet, dass** die Steuerungsvorrichtung (32) dazu eingerichtet ist, die durch die Drucksensoren (31) ermittelten Drücke zu überwachen, und die Stellorgane (36) und/oder das Stellventil (37) so anzusteuern, dass die Drücke innerhalb vorbestimmter Grenzen bleiben.

16. Verfahren nach einem der vorhergehenden Ansprüche, **dadurch gekennzeichnet, dass** die Steuerungsvorrichtung (32) mithilfe maschinellen Lernens auf der Grundlage der durch die Drucksensoren (31) ermittelten Drücke, Werkstoffparameter der zu verarbeitenden Flüssigkeit und/oder Schmelze, und Stellparameter der Stellorgane (36) und/oder des Stellventiles (37), dazu eingerichtet ist, die Stellorgane (36) und/oder das Stellventil (37) proaktiv so anzusteuern, dass die Drücke innerhalb vorbestimmter Grenzen bleiben.

17. Verfahren nach einem der vorhergehenden Ansprüche, **dadurch gekennzeichnet, dass** die Flüssigkeit bzw. die Schmelze ein Polymer, insbesondere ein Kunststoff, und/oder ein pastöses Material ist.

18. Filtrationsanlage (1) zur Filtration von Flüssigkeiten und/oder Schmelzen mit darin enthaltenen Verunreinigungen, die Filtrationsanlage (1) umfasst
- ein Gehäuse (2) mit einem gemeinsamen Zufuhrkanal (3) und einem gemeinsamen Abfuhrkanal (4),
- eine erste Filtervorrichtung (5) mit einem ersten Einlasskanal (7), einer ersten Filterkammer (8), einem durch die erste Filterkammer (8) hindurchgeführten bandförmigen ersten Filterelement (9), einer ersten Klemmeinheit (10) und einem ersten Auslasskanal (11), wobei der erste Einlasskanal (7) mit dem gemeinsamen Zufuhrkanal (3) in Strömungsverbindung steht und der erste Auslasskanal (11) mit dem gemeinsamen Abfuhrkanal (4) in Strömungsverbindung steht, und wobei das erste Filterelement (9) in Verstellrichtung des ersten Filterelements (9) gesehen beidseits der ersten Filterkammer (8) mittels einer ersten und zweiten Klemmvorrichtung der ersten Klemmeinheit (10) bedarfsweise geklemmt gehalten ist,
- eine zweite Filtervorrichtung (6) mit einem zweiten Einlasskanal (14), einer zweiten Filterkammer (15), einem durch die zweite Filterkammer (15) hindurchgeführten bandförmigen zweiten Filterelement (16), einer zweiten Klemmeinheit (17) und einem zweiten Auslasskanal (18), wobei der zweite Einlasskanal (14) mit dem gemeinsamen Zufuhrkanal (3) in Strömungsverbindung steht und der zweite Auslasskanal (18) mit dem gemeinsamen Abfuhrkanal (4) in Strömungsverbindung steht, und wobei das zweite Filterelement (16) in Verstellrichtung des zweiten Filterelements (16) gesehen beidseits der zweiten Filterkammer (15) mittels einer dritten und vierten Klemmvorrichtung der zweiten Klemmeinheit (17) bedarfsweise geklemmt gehalten ist,
insbesondere zur Durchführung des Verfahrens zur Filtration nach einem der vorhergehenden Ansprüche,
**dadurch gekennzeichnet,**
- **dass** jede der Klemmvorrichtung (12, 13; 19, 20) der ersten Klemmeinheit (10) und der zweiten Klemmeinheit (17) jeweils ein Klemmelement (21) und jeweils ein mit diesem zusammenwirkendes Stellelement (22) umfasst,
- **dass** jedes der Klemmelemente (21) in einer Normalrichtung auf eine Flachseite des jeweiligen Filterelements (9, 16) relativ bezüglich des Gehäuses (2) verstellbar geführt ist und in einer Querausrichtung bezüglich der Verstellrichtung des jeweiligen Filterelements (9, 16) angeordnet ist,
- **dass** jedes der Stellelemente (22) in einer parallelen Richtung bezüglich der Flachseite des jeweiligen Filterelements (9, 16) relativ bezüglich des Gehäuses (2) verstellbar geführt ist und ebenfalls in einer Querausrichtung bezüglich der Verstellrichtung des jeweiligen Filterelements (9, 16) angeordnet ist,
- **dass** die Klemmelemente (21) an deren dem jeweiligen Stellelement (22) zugewendeten Seite jeweils eine Klemmelement-Kontaktfläche (23) aufweisen,
- **dass** die Stellelemente (22) an deren dem jeweiligen Klemmelement (21) zugewendeten Seite jeweils eine Stellelement-Kontaktfläche (24) aufweisen,
- **dass** die jeweils zusammenwirkenden und einander zugewendeten Klemmelement-Kontaktflächen (23) und Stellelement-Kontaktflächen (24) gegengleich zueinander verlaufend ausgerichtet sind und die jeweiligen Klemmelement-Kontaktflächen (23) und die Stellelement-Kontaktflächen (24) weiters eine schräg verlaufende Längsausrichtung bezüglich der Flachseite des jeweiligen Filterelements (9, 16) aufweisen, und
- **dass** bei einer relativen Verstellung des Stellelements (22) in Richtung einer ersten Verstellrichtung bezüglich des damit zusammenwirkenden Klemmelements (21) das Klemmelement (21) in eine am jeweiligen Filterelement (9, 16) anliegende Klemmstellung gegen das Gehäuse (2) gedrückt ist und bei einer bezüglich der ersten Verstellrichtung dazu entgegengesetzten zweiten Verstellrichtung des Stellelements (22) das damit zusammenwirkende Klemmelement (21) in eine Freigabestellung für das jeweilige Filterelement (9, 16) verstellbar ist.

19. Filtrationsanlage (1) nach Anspruch 18, **dadurch gekennzeichnet, dass** die jeweils miteinander zusammenwirkenden Klemmelemente (21) und Stellelemente (22) im Bereich von deren Klemmelement-Kontaktflächen (23) und Stellelement-Kontaktflächen (24) mittels einer ersten Führungsanordnung (25) längsverschieblich aneinander gehalten und geführt sind.

20. Filtrationsanlage (1) nach Anspruch 18 oder 19, **dadurch gekennzeichnet, dass** die jeweiligen Stellelemente (22) an deren vom jeweiligen Filterelement (9, 16) abgewendeten Seite mittels einer zweiten Führungsanordnung (26) längsverschieblich am Gehäuse (2) gehalten und geführt sind.

21. Filtrationsanlage (1) nach einem der Ansprüche 18 bis 20, **dadurch gekennzeichnet, dass** die Klemmelemente (21) in Ansicht auf deren dem jeweiligen Filterelement (9, 16) zugewendeten Klemmfläche umfänglich durchgängig gegen das Gehäuse (2) abgedichtet sind.

22. Filtrationsanlage (1) nach einem der Ansprüche 18 bis 21, **dadurch gekennzeichnet, dass** jede der Klemmvorrichtungen (12, 13; 19, 20) der Klemmeinheiten (10, 17), insbesondere jedes von deren Stellelementen (22), mit einem eigenen Stellantrieb in Antriebsverbindung steht.

23. Filtrationsanlage (1) nach einem der Ansprüche 18 bis 22, weiterhin umfassend Stellorgane (36) in jedem der Einlasskanäle (7, 14) und/oder in jedem der Auslasskanäle (11, 18) und/oder ein Stellventil (37) im Übergangsabschnitt zu den Einlasskanälen (7, 14), **dadurch gekennzeichnet, dass** die Stellorgane (36) und/oder das Stellventil (37) den zugeführten Anteil an Flüssigkeit und/oder Schmelze in die jeweilige Filterkammer (8, 15) begrenzen können.

24. Filtrationsanlage (1) nach einem der Ansprüche 18 bis 23, weiterhin umfassend eine Steuerungsvorrichtung (32), **dadurch gekennzeichnet, dass** die Steuerungsvorrichtung (32) die Stellorgane (36) und/oder das Stellventil (37) ansteuert.

25. Filtrationsanlage (1) nach einem der Ansprüche 18 bis 24, **dadurch gekennzeichnet, dass** jeweils eine erste Heizvorrichtung (27, 28) bei jedem der Filterelemente (9, 16) vorgesehen ist, und jede der ersten Heizvorrichtungen (27, 28) der jeweiligen Filterkammer (8, 15) in Verstellrichtung des jeweiligen Filterelements (9, 16) gesehen vorgeordnet ist.

26. Filtrationsanlage (1) nach einem der Ansprüche 18 bis 25, **dadurch gekennzeichnet, dass** jeweils eine zweite Heizvorrichtung (29, 30) bei jedem der Filterelemente (9, 16) vorgesehen ist, und jede der zweiten Heizvorrichtungen (29, 30) der jeweiligen Filterkammer (8, 15) in Verstellrichtung des jeweiligen Filterelements (9, 16) gesehen nachgeordnet ist.

27. Filtrationsanlage (1) nach einem der Ansprüche 18 bis 26, **dadurch gekennzeichnet, dass** in jedem der Einlasskanäle (7, 14) und/oder in jeder der Filterkammern (8, 15) auf der dem jeweiligen Einlasskanal (7, 14) zugewendeten Seite zumindest ein Drucksensor (31) angeordnet oder aufgenommen ist und die Drucksensoren (31) zur Ermittlung des in der Flüssigkeit und/oder Schmelze aufgebauten Drucks ausgebildet sind.

28. Filtrationsanlage (1) nach einem der Ansprüche 18 bis 27, weiterhin umfassend eine Steuerungsvorrichtung (32), **dadurch gekennzeichnet, dass** die Steuerungsvorrichtung (32) dazu eingerichtet ist, die durch die Drucksensoren (31) ermittelten Drücke zu überwachen, und die Stellorgane (36) und/oder das Stellventil (37) so anzusteuern, dass die Drücke innerhalb vorbestimmter Grenzen bleiben.

29. Filtrationsanlage (1) nach einem der Ansprüche 18 bis 28, weiterhin umfassend eine Steuerungsvorrichtung (32), **dadurch gekennzeichnet, dass** die Steuerungsvorrichtung (32) mithilfe maschinellem Lernens auf der Grundlage der durch die Drucksensoren (31) ermittelten Drücke, Werkstoffparameter der zu verarbeitenden Flüssigkeit und/oder Schmelze, und Stellparameter der Stellorgane (36) und/oder des Stellventiles (37), dazu eingerichtet ist, die Stellorgane (36) und/oder das Stellventil (37) proaktiv so anzusteuern, dass die Drücke innerhalb vorbestimmter Grenzen bleiben.

30. Filtrationsanlage (1) nach einem der Ansprüche 18 bis 29, **dadurch gekennzeichnet, dass** die Flüssigkeit bzw. die Schmelze ein Polymer, insbesondere ein Kunststoff, und/oder ein pastöses Material ist.

## Claims

1. A method for the filtration of liquids and/or melts with impurities contained therein, by means of a filtration system (1), in which the following steps are carried out
- providing a housing (2) with a common supply channel (3) and a common discharge channel (4),
- providing a first filter device (5) with a first inlet channel (7), a first filter chamber (8), a band-shaped first filter element (9) passed through the first filter chamber (8), a first clamping unit (10) and a first outlet channel (11), wherein the first inlet channel (7) is in flow connection with the common supply channel (3) and the first outlet channel (11) is in flow connection with the common discharge channel (4), and wherein the first filter element (9), viewed in the adjustment direction of the first filter element (9), is held clamped as required on both sides of the first filter chamber (8) by means of a first and second clamping device (12, 13) of the first clamping unit (10),
- providing a second filter device (6) with a second inlet channel (14), a second filter chamber (15), a band-shaped second filter element (16) passed through the second filter chamber (15), a second clamping unit (17) and a second outlet channel (18), wherein the second inlet channel (14) is in flow connection with the common supply channel (3) and the second outlet channel (18) is in flow connection with the common discharge channel (4), and wherein the second filter element (16), viewed in the adjustment direction of the second filter element (16), is held clamped as required on both sides of the second filter chamber (15) by means of a third and fourth clamping device (19, 20) of the second clamping unit (17),
- providing the liquid and/or melt to be filtered in a flowable aggregate state and feeding the liquid and/or melt into the common supply channel (3), wherein the liquid and/or melt is conveyed through at least one of the filter devices (5, 6) to the common discharge channel (4) and being filtered in the process,
**characterized**
- **in that** each of the clamping devices (12, 13; 19, 20) of the first clamping unit (10) and the second clamping unit (17) respectively comprises a clamping element (21) and an actuating element (22) interacting therewith,
- **in that** each of the clamping elements (21) is guided in a normal direction onto a flat side of the respective filter element (9, 16) in an adjustable manner relative to the housing (2) and is arranged in a transverse orientation with respect to the adjustment direction of the respective filter element (9, 16),
- **in that** each of the actuating elements (22) is guided in a parallel direction with respect to the flat side of the respective filter element (9, 16) in an adjustable manner relative to the housing (2) and is also arranged in a transverse orientation with respect to the adjustment direction of the respective filter element (9, 16),
- **in that** the clamping elements (21) each have a clamping element contact surface (23) on their side facing the respective actuating element (22),
- **in that** the actuating elements (22) each have an actuating element contact surface (24) on their side facing the respective clamping element (21),
- **in that** the respectively interacting and mutually facing clamping element contact surfaces (23) and actuating element contact surfaces (24) are aligned so as to extend diametrically opposite to one another and the respective clamping element contact surfaces (23) and the actuating element contact surfaces (24) furthermore have an oblique longitudinal orientation with respect to the flat side of the respective filter element (9, 16), and
- **in that** upon a relative adjustment of the actuating element (22) in a first adjustment direction with respect to the clamping element (21) interacting therewith, the clamping element (21) is pressed against the housing (2) into a clamping position resting against the respective filter element (9, 16) and in a second adjustment direction of the actuating element (22), which is opposite to the first adjustment direction, the clamping element (21) interacting therewith is adjusted into a release position for the respective filter element (9, 16). (State of the art: WO 2017/163180 A1)

2. The method according to claim 1, **characterized in that** the clamping elements (21) and actuating elements (22) are held and guided against each other in a longitudinally adjustable manner in the region of their clamping element contact surfaces (23) and actuating element contact surfaces (24) by means of a first guide arrangement (25).

3. The method according to claim 1 or 2, **characterized in that** the respective actuating elements (22) are held and guided in a longitudinally adjustable manner on the housing (2) on their side facing away from the respective filter element (9, 16) by means of a second guide arrangement (26).

4. The method according to one of the preceding claims, **characterized in that** the clamping elements (21), viewed towards their clamping surface facing the respective filter element (9, 16), are circumferentially sealed against the housing (2).

5. The method according to one of the preceding claims, **characterized in that** each of the clamping devices (12, 13; 19, 20) of the clamping units (10, 17), in particular each of their actuating elements (22) is adjusted independently of one another between its clamping position and its release position.

6. The method according to one of the preceding claims, **characterized in that** when the clamping elements (21) are in the clamping position, the respective filter chamber (8, 15) is sealed against the housing (2).

7. The method according to one of the preceding claims, **characterized in that** during filter operation of the filtration system (1) at least a proportion of 10% of the liquid and/or melt is always conveyed in one of the inlet channels (7, 14) and the remaining proportion to 100% of the liquid and/or melt is conveyed in the other inlet channel (14, 7).

8. The method according to one of the preceding claims, **characterized in that** when renewing the active filter surface of one of the filter elements (9, 16), the following steps are carried out
- reducing the proportion of liquid and/or melt supplied into the respective filter chamber (8, 15) to a maximum of 2% of the total mass flow/volume flow or completely preventing the supply of liquid and/or melt into the respective filter chamber (8, 15),
- adjusting the respective clamping devices (12, 13; 19, 20) of the respective clamping unit (10, 17) into their release position,
- moving the respective filter element (9, 16) in its adjustment direction by a predetermined adjustment range through the respective filter chamber (8, 15),
- adjusting one of the two clamping devices (12, 13; 19, 20) of the respective clamping unit (10, 17) into its clamping position,
- pretensioning the respective filter element (9, 16) with a predetermined tensile force in the direction of the other of the two clamping devices (13, 12; 20, 19) of the respective clamping unit (17, 10),
- adjusting the other of the two clamping devices (13, 12; 20, 19) of the respective clamping unit (17,10) into its clamping position, and
- releasing the supply of the liquid and/or melt into the respective filter chamber (8, 15) with the renewed filter surface of the respective filter element (9, 16).

9. The method according to one of the preceding claims, **characterized in that** the reduction of the proportion of liquid and/or melt fed into the respective filter chamber (8, 15) by actuators (36) in each of the inlet channels (7, 14) and/or in each of the outlet channels (11, 18) or through a control valve (37) in the transition section to the inlet channels (7, 14) is effected.

10. The method according to one of the preceding claims, **characterized in that** the actuators (36) and/or the control valve (37) can be controlled by a control device (32).

11. The method according to one of the preceding claims, **characterized in that** the tensile force applied to the respective filter element (9, 16) during renewal of its active filter surface is determined and/or monitored.

12. The method according to one of the preceding claims, **characterized in that** the respective filter element (9, 16), in particular before the renewal of its active filter surface, is heated to a temperature value selected from a temperature value range having a lower limit of 20 °C above room temperature, in particular melting temperature of the respective melt, and an upper limit of 400 °C, in particular the respective processing temperature or slightly above the respective processing temperature, before being fed into the respective filter chamber (8, 15).

13. The method according to one of the preceding claims, **characterized in that** the respective filter element (9, 16), in particular after the renewal of its active filter surface, is heated to a temperature value selected from a temperature value range with a lower limit of 20 °C above room temperature, in particular melting temperature of the respective melt, and an upper limit of 400 °C, in particular the respective processing temperature or slightly above the respective processing temperature, after being passed through the respective filter chamber (8, 15).

14. The method according to one of the preceding claims, **characterized in that** in each of the inlet channels (7, 14) and/or in each of the filter chambers (8, 15) on the side facing the respective inlet channel (7, 14), the pressure built up in the liquid and/or melt is determined by pressure sensors (31).

15. The method according to one of the preceding claims, **characterized in that** the control device (32) is configured to monitor the pressure acquired by the pressure sensors (31), and to control the actuators (36) and/or the control valve (37) in such a way that the pressures remain within predetermined limits.

16. The method according to one of the preceding claims, **characterized in that** the control device (32) is configured, using machine learning on the basis of the pressures determined by the pressure sensors (31), material parameters of the liquid and/or melt to be processed, and control parameters of the actuators (36) and/or the control valve (37), to proactively control the actuators (36) and/or the control valve (37) in such a way that the pressures remain within predetermined limits.

17. The method according to one of the preceding claims, **characterized in that** the liquid or the melt is a polymer, in particular a plastic, and/or a pasty material.

18. A filtration system (1) for the filtration of liquids and/or melts with impurities contained therein, the filtration system (1) comprising
- a housing (2) with a common supply channel (3) and a common discharge channel (4),
- a first filter device (5) with a first inlet channel (7), a first filter chamber (8), a band-shaped first filter element (9) passed through the first filter chamber (8), a first clamping unit (10) and a first outlet channel (11), wherein the first inlet channel (7) is in flow connection with the common supply channel (3) and the first outlet channel (11) is in flow connection with the common discharge channel (4), and wherein the first filter element (9), viewed in the adjustment direction of the first filter element (9), is held clamped as required on both sides of the first filter chamber (8) by means of a first and second clamping device of the first clamping unit (10),
- a second filter device (6) with a second inlet channel (14), a second filter chamber (15), a band-shaped second filter element (16) passed through the second filter chamber (15), a second clamping unit (17) and a second outlet channel (18), wherein the second inlet channel (14) is in flow connection with the common supply channel (3) and the second outlet channel (18) is in flow connection with the common discharge channel (4), and wherein the second filter element (16), viewed in the adjustment direction of the second filter element (16), is held clamped as required on both sides of the second filter chamber (15) by means of a third and fourth clamping device of the second clamping unit (17),
in particular for carrying out the filtration method according to one of the preceding claims,
**characterized**
- **in that** each of the clamping devices (12, 13; 19, 20) of the first clamping unit (10) and the second clamping unit (17) comprises a clamping element (21) and an actuating element (22) interacting therewith,
- **in that** each of the clamping elements (21) is guided in a normal direction onto a flat side of the respective filter element (9, 16) in an adjustable manner relative to the housing (2) and is arranged in a transverse orientation with respect to the adjustment direction of the respective filter element (9, 16),
- **in that** each of the actuating elements (22) is guided in a parallel direction with respect to the flat side of the respective filter element (9, 16) so as to be adjustable relative to the housing (2) and is also arranged in a transverse orientation with respect to the adjustment direction of the respective filter element (9, 16),
- **in that** the clamping elements (21) each have a clamping element contact surface (23) on their side facing the respective actuating element (22)
- **in that** the actuating elements (22) each have an actuating element contact surface (24) on their side facing the respective clamping element (21),
- **in that** the respectively interacting and mutually facing clamping element contact surfaces (23) and actuating element contact surfaces (24) are aligned so as to extend diametrically opposite to one another and the respective clamping element contact surfaces (23) and the actuating element contact surfaces (24) furthermore have an oblique longitudinal orientation with respect to the flat side of the respective filter element (9, 16), and
- **in that** when the actuating element (22) is relatively adjusted in a first adjustment direction with respect to the clamping element (21) interacting therewith, the clamping element (21) is pressed against the housing (2) into a clamping position resting against the respective filter element (9, 16) and when the actuating element (22) is adjusted in a second adjustment direction opposite to the first adjustment direction, the clamping element (21) interacting therewith can be adjusted into a release position for the respective filter element (9, 16).

19. The filtration system (1) according to claim 18, **characterized in that** the interacting clamping elements (21) and actuating element (22) are held and guided against each other in a longitudinally adjustable manner in the region of their clamping element contact surfaces (23) and actuating element contact surfaces (24) by means of a first guide arrangement (25).

20. The filtration system (1) according to claim 18 or 19, **characterized in that** the respective actuating elements (22) are held and guided in a longitudinally adjustable manner on the housing (2) on their side facing away from the respective filter element (9, 16) by means of a second guide arrangement (26).

21. The filtration system (1) according to one of claims 18 to 20, **characterized in that** the clamping elements (21), viewed towards their clamping surface facing the respective filter element (9, 16), are circumferentially sealed against the housing (2).

22. The filtration system (1) according to one of claims 18 to 21, **characterized in that** each of the clamping devices (12, 13; 19, 20) of the clamping units (10, 17), in particular each of its actuating elements (22) is in drive connection with its own actuating drive.

23. The filtration system (1) according to one of claims 18 to 22, further comprising actuators (36) in each of the inlet channels (7, 14) and/or in each of the outlet channels (11, 18) and/or a control valve (37) in the transition section to the inlet channels (7, 14), **characterized in that** the actuators (36) and/or the control valve (37) can limit the proportion of liquid and/or melt fed into the respective filter chamber (8, 15).

24. The filtration system (1) according to one of claims 18 to 23, further comprising a control device (32), **characterized in that** the control device (32) controls the actuators (36) and/or the control valve (37).

25. The filtration system (1) according to one of claims 18 to 24, **characterized in that** a first heating device (27, 28) is provided for each of the filter elements (9, 16), and each of the first heating devices (27, 28) is arranged upstream of the respective filter chamber (8, 15) as viewed in the adjustment direction of the respective filter element (9, 16).

26. The filtration system (1) according to one of claims 18 to 25, **characterized in that** a second heating device (29, 30) is provided for each of the filter elements (9, 16), and each of the second heating devices (29, 30) is arranged downstream of the respective filter chamber (8, 15) as viewed in the adjustment direction of the respective filter element (9, 16).

27. The filtration system (1) according to one of claims 18 to 26, **characterized in that** at least one pressure sensor (31) is arranged or accommodated in each of the inlet channels (7, 14) and/or in each of the filter chambers (8, 15) on the side facing the respective inlet channel (7, 14), and the pressure sensors (31) are configured to determine the pressure built up in the liquid and/or melt.

28. The filtration system (1) according to one of claims 18 to 27, further comprising a control device (32), **characterized in that** the control device (32) is configured to monitor the pressures determined by the pressure sensors (31) and to control the actuators (36) and/or the control valve (37) in such a way that the pressures remain within predetermined limits.

29. The filtration system (1) according to one of claims 18 to 28, further comprising a control device (32), **characterized in that** the control device (32) is configured, using machine learning on the basis of the pressures determined by the pressure sensors (31), material parameters of the liquid and/or melt to be processed, and control parameters of the actuators (36) and/or the control valve (37), to proactively control the actuators (36) and/or the control valve (37) in such a way that the pressures remain within predetermined limits,.

30. The filtration system (1) according to one of claims 18 to 29, **characterized in that** the liquid or the melt is a polymer, in particular a plastic, and/or a pasty material.

## Revendications

1. Procédé de filtration de liquides et/ou de masses fondues
contenant des impuretés, au moyen d'une installation de filtration (1), dans lequel les étapes suivantes sont réalisées :
mise à disposition d'un boîtier (2) avec un canal d'alimentation commun (3) et un canal d'évacuation commun (4),
mise à disposition d'un premier dispositif de filtration (5) avec un premier canal d'entrée (7) d'une première chambre de filtration (8), un premier élément filtrant en forme de bande (9) passant à travers la première chambre de filtration (8), une première unité de serrage (10) et un premier canal de sortie (11), le premier canal d'entrée (7) étant en communication d'écoulement avec le canal d'alimentation commun (3) et le premier canal de sortie (11) étant en communication d'écoulement avec le canal d'évacuation commun (4), et le premier élément filtrant (9) étant maintenu serré, si nécessaire, des deux côtés de la première chambre de filtration (8) vu dans la direction de réglage du premier élément filtrant (9), au moyen d'un premier et d'un deuxième dispositifs de serrage (12, 13) de la première unité de serrage (10),
mise à disposition d'un deuxième dispositif de filtration (6) avec un deuxième canal d'entrée (14) d'une deuxième chambre de filtration (15), un deuxième élément filtrant en forme de bande (16) passant à travers la deuxième chambre de filtration (15), une deuxième unité de serrage (17) et un deuxième canal de sortie (18), le deuxième canal d'entrée (14) étant en communication d'écoulement avec le canal d'alimentation commun (3) et le deuxième canal de sortie (18) étant en communication d'écoulement avec le canal d'évacuation commun (4), et le deuxième élément filtrant (16) étant maintenu serré, si nécessaire, des deux côtés de la deuxième chambre de filtration (15), vu dans la direction de réglage du deuxième élément filtrant (16), au moyen d'un troisième et d'un quatrième dispositifs de serrage (19, 20) de la deuxième unité de serrage (17),
mise à disposition de liquide et/ou de masse fondue à filtrer dans un état physique fluide et acheminement du liquide et/ou de la masse fondue dans le canal d'alimentation commun (3), le liquide et/ou la masse fondue étant transportés à travers au moins l'un des dispositifs de filtration (5, 6) vers le canal d'évacuation commun (4) et filtrés au cours de ce transport, **caractérisé en**
**ce que** chacun des dispositifs de serrage (12, 13 ; 19, 20) de la première unité de serrage (10) et de la deuxième unité de serrage (17) comprend respectivement un élément de serrage (21) et un élément de positionnement (22) coopérant avec celui-ci,
ce que chacun des éléments de serrage (21) est guidé de manière réglable dans une direction normale sur un côté plat de l'élément filtrant respectif (9, 16) par rapport au boîtier (2) et est agencé dans une orientation transversale par rapport à la direction de réglage de l'élément filtrant respectif (9, 16),
ce que chacun des éléments de positionnement (22) est guidé de manière réglable dans une direction parallèle par rapport au côté plat de l'élément filtrant respectif (9, 16) par rapport au boîtier (2) et est également agencé dans une orientation transversale par rapport à la direction de réglage de l'élément filtrant respectif (9, 16),
ce que les éléments de serrage (21) présentent, sur leur côté tourné vers l'élément de positionnement respectif (22), une surface de contact d'élément de serrage (23),
ce que les éléments de positionnement (22) présentent, sur leur côté tourné vers l'élément de serrage respectif (21), une surface de contact d'élément de positionnement (24),
ce que les surfaces de contact d'élément de serrage (23) et les surfaces de contact d'élément de positionnement (24) qui coopèrent et se font face sont orientées de manière opposée les unes par rapport aux autres et ce que les surfaces de contact d'élément de serrage (23) et les surfaces de contact d'élément de positionnement (24) présentent en outre une orientation longitudinale oblique par rapport au côté plat de l'élément filtrant respectif (9, 16) et
ce que, lors d'un déplacement relatif de l'élément de positionnement (22) dans une première direction de réglage par rapport à l'élément de serrage (21) coopérant avec lui, l'élément de serrage (21) est pressé dans une position de serrage adjacente à l'élément filtrant respectif (9, 16) contre le boîtier (2) et **en ce que** que, dans une deuxième direction de réglage opposée à la première direction de réglage de l'élément de positionnement (22), l'élément de serrage (21) coopérant avec celui-ci est déplacé dans une position de dégagement pour l'élément filtrant (9, 16) correspondant.

2. Procédé selon la revendication 1, **caractérisé en ce que**
les éléments de serrage (21) et les éléments de positionnement (22) qui coopèrent entre eux sont maintenus et guidés de manière à pouvoir se déplacer longitudinalement les uns par rapport aux autres au niveau de leurs surfaces de contact d'élément de serrage (23) et surfaces de contact d'élément de positionnement (24) au moyen d'un premier dispositif de guidage (25).

3. Procédé selon la revendication 1 ou 2, **caractérisé en ce que** les éléments de positionnement respectifs (22) sont maintenus et guidés de manière à pouvoir se déplacer longitudinalement sur le boîtier (2) au moyen d'un deuxième dispositif de guidage (26) sur leur côté opposé à l'élément filtrant respectif (9, 16).

4. Procédé selon l'une des revendications précédentes, **caractérisé en ce que** les éléments de serrage (21) sont scellés de manière continue sur leur pourtour contre le boîtier (2) au niveau de leur surface de serrage tournée vers l'élément filtrant respectif (9, 16).

5. Procédé selon l'une des revendications précédentes, **caractérisé en ce que** chacun des dispositifs de serrage (12, 13 ; 19, 20) des unités de serrage (10, 17), en particulier chacun de leurs éléments de positionnement (22), est réglé indépendamment des autres entre leur position de serrage et leur position de dégagement.

6. Procédé selon l'une des revendications précédentes, **caractérisé en ce que**, lorsque les éléments de serrage (21) se trouvent en position de serrage, la chambre de filtration respective (8, 15) est scellée par rapport au boîtier (2).

7. Procédé selon l'une des revendications précédentes, **caractérisé en ce que**, pendant le fonctionnement en mode filtration de l'installation de filtration (1), au moins 10 % du liquide et/ou de la masse fondue sont toujours transportés dans l'un des canaux d'entrée (7, 14) et le reste est transporté dans l'autre canal d'entrée (14, 7) jusqu'à atteindre 100 % du liquide et/ou de la masse fondue.

8. Procédé selon l'une des revendications précédentes, **caractérisé en ce que**, lors du renouvellement de la surface filtrante active de l'un des éléments filtrants (9, 16), les étapes suivantes sont effectuées :
réduction de la proportion de liquide et/ou de matière fondue guidée dans la chambre de filtration respective (8, 15) jusqu'à un maximum de 2 % du débit massique/débit volumique total ou arrêt complet de l'alimentation en liquide et/ou en matière fondue dans la chambre de filtration respective (8, 15),
réglage des dispositifs de serrage respectifs (12, 13 ; 19, 20) de l'unité de serrage respective (10, 17) dans leur position de dégagement,
déplacement de l'élément filtrant respectif (9, 16) dans sa direction de réglage sur une course de réglage prédéterminée à travers la chambre de filtration respective (8, 15),
déplacement de l'un des deux dispositifs de serrage (12, 13 ; 19, 20) de l'unité de serrage respective (10, 17) dans sa position de serrage,
précontrainte de l'élément filtrant respectif (9, 16) avec une force de traction prédéterminée en direction de l'autre des deux dispositifs de serrage (13, 12 ; 20, 19) de l'unité de serrage respective (17, 10),
déplacement de l'autre des deux dispositifs de serrage (13, 12 ; 20, 19) de l'unité de serrage respective (17, 10) dans sa position de serrage, et
dégagement de l'alimentation en liquide et/ou en matière fondue dans la chambre de filtration respective (8, 15) avec la surface de filtration renouvelée de l'élément filtrant respectif (9, 16).

9. Procédé selon l'une des revendications précédentes, **caractérisé en ce que** la réduction de la proportion de liquide et/ou de matière fondue guidée dans la chambre de filtration respective (8, 15) est effectuée par des organes de réglage (36) dans chacun des canaux d'entrée (7, 14) et/ou dans chacun des canaux de sortie (11, 18) ou par une vanne de réglage (37) dans la section de transition vers les canaux d'entrée (7, 14).

10. Procédé selon l'une des revendications précédentes, **caractérisé en ce que** les organes de réglage (36) et/ou la vanne de réglage (37) sont commandés par un dispositif de commande (32).

11. Procédé selon l'une des revendications précédentes, **caractérisé en ce que** la force de traction appliquée à l'élément filtrant respectif (9, 16) lors du renouvellement de sa surface filtrante active est déterminée et/ou surveillée.

12. Procédé selon l'une des revendications précédentes, **caractérisé en ce que** l'élément filtrant respectif (9, 16), en particulier avant le renouvellement de sa surface filtrante active, avant son guidage dans la chambre de filtration respective (8, 15), est chauffé à une température choisie dans une plage de valeurs de température ayant une limite inférieure de 20°C au-dessus de la température ambiante, en particulier la température de fusion de la matière fondue respective, et une limite supérieure de 400°C, en particulier à la température de traitement respective ou légèrement supérieure à la température de traitement respective.

13. Procédé selon l'une des revendications précédentes, **caractérisé en ce que** l'élément filtrant respectif (9, 16), en particulier après le renouvellement de sa surface filtrante active, est chauffé après le passage à travers la chambre de filtration respective (8, 15) à une température choisie dans une plage de températures ayant une limite inférieure de 20°C au-dessus de la température ambiante, en particulier la température de fusion de la masse fondue respective, et une limite supérieure de 400°C, en particulier à la température de traitement respective ou légèrement supérieure à la température de traitement respective.

14. Procédé selon l'une des revendications précédentes, **caractérisé en ce que**, dans chacun des canaux d'entrée (7, 14) et/ou dans chacune des chambres de filtration (8, 15), la pression établie dans le liquide et/ou la masse fondue est déterminée par des capteurs de pression (31) sur le côté tourné vers le canal d'entrée respectif (7, 14).

15. Procédé selon l'une des revendications précédentes, **caractérisé en ce que** le dispositif de commande (32) est conçu pour surveiller les pressions déterminées par les capteurs de pression (31) et pour commander les organes de réglage (36) et/ou la vanne de réglage (37) de manière à ce que les pressions restent dans des limites prédéfinies.

16. Procédé selon l'une des revendications précédentes, **caractérisé en ce que** le dispositif de commande (32) est conçu, à l'aide d'un apprentissage automatique basé sur les pressions déterminées par les capteurs de pression (31), les paramètres des matériaux du liquide et/ou de la masse fondue à traiter et les paramètres de réglage des organes de réglage (36) et/ou de la vanne de réglage (37), pour commander de manière proactive les organes de réglage (36) et/ou la vanne de réglage (37) de telle sorte que les pressions restent dans des limites prédéfinies.

17. Procédé selon l'une des revendications précédentes, **caractérisé en ce que** le liquide ou la masse fondue est un polymère, en particulier une matière plastique et/ou un matériau pâteux.

18. Installation de filtration (1) pour la filtration de liquides et/ou de masses fondues contenant des impuretés, l'installation de filtration (1) comprenant
un boîtier (2) avec un canal d'alimentation commun (3) et un canal d'évacuation commun (4),
un premier dispositif de filtration (5) avec un premier canal d'entrée (7), une première chambre de filtration (8), un premier élément filtrant en forme de bande (9) passant à travers la première chambre de filtration (8), une première unité de serrage (10) et un premier canal de sortie (11), le premier canal d'entrée (7) étant en communication d'écoulement avec le canal d'alimentation commun (3) et le premier canal de sortie (11) étant en communication d'écoulement avec le canal d'évacuation commun (4), et dans lequel le premier élément filtrant (9) est maintenu serré, si nécessaire, des deux côtés de la première chambre de filtration (8), vu dans la direction de réglage du premier élément filtrant (9), au moyen d'un premier et d'un deuxième dispositif de serrage de la première unité de serrage (10),
un deuxième dispositif de filtration (6) avec un deuxième canal d'entrée (14), une deuxième chambre de filtration (15), un deuxième élément filtrant en forme de bande (16) passant à travers la deuxième chambre de filtration (15), une deuxième unité de serrage (17) et un deuxième canal de sortie (18), le deuxième canal d'entrée (14) étant en communication d'écoulement avec le canal d'alimentation commun (3) et le deuxième canal de sortie (18) étant en communication d'écoulement avec le canal d'évacuation commun (4), et le deuxième élément filtrant (16) étant maintenu serré, selon les besoins, des deux côtés de la deuxième
chambre de filtration (15) au moyen d'un troisième et d'un quatrième dispositifs de serrage de la deuxième unité de serrage (17), vu dans la direction de réglage du deuxième élément filtrant (16), en particulier pour la mise en œuvre du procédé de filtration selon l'une des revendications précédentes,
**caractérisé en ce**
**que** chacun des dispositifs de serrage (12, 13 ; 19, 20) de la première unité de serrage (10) et de la deuxième unité de serrage (17) comprend respectivement un élément de serrage (21) et un élément de positionnement (22) coopérant avec celui-ci,
**que** chacun des éléments de serrage (21) est guidé de manière réglable dans une direction normale sur un côté plat de l'élément filtrant respectif (9, 16) par rapport au boîtier (2) et est agencé dans une orientation transversale par rapport à la direction de réglage de l'élément filtrant respectif (9, 16),
**que** chacun des éléments de positionnement (22) est guidé de manière réglable dans une direction parallèle par rapport au côté plat de l'élément filtrant respectif (9, 16) par rapport au boîtier (2) et est également agencé dans une orientation transversale par rapport à la direction de réglage de l'élément filtrant respectif (9, 16),
**que** les éléments de serrage (21) présentent, sur leur côté tourné vers l'élément de positionnement respectif (22), une surface de contact d'élément de serrage (23),
**que** les éléments de positionnement (22) présentent chacun une surface de contact d'élément de positionnement (24) sur leur côté tourné vers l'élément de serrage respectif (21),
**que** les surfaces de contact d'élément de serrage (23) et les surfaces de contact d'élément de positionnement (24) qui coopèrent et se font face sont orientées de manière opposée l'une par rapport à l'autre et que les surfaces de contact d'élément de serrage respectives (23) et les surfaces de contact d'élément de positionnement (24) présentent en outre une orientation longitudinale oblique par rapport au côté plat de l'élément filtrant respectif (9, 16), et
**qu'**en cas de déplacement relatif de l'élément de positionnement (22) dans une première direction de réglage par rapport à l'élément de serrage (21) coopérant avec lui, l'élément de serrage (21) est pressé contre le boîtier (2) dans une position de serrage adjacente à l'élément filtrant respectif (9, 16) et que, dans une deuxième direction de réglage de l'élément de positionnement (22) opposée à la première direction de réglage,
l'élément de serrage (21) coopérant avec celui-ci peut être déplacé dans une position de dégagement pour l'élément filtrant respectif (9, 16).

19. Installation de filtration (1) selon la revendication 18, **caractérisée en ce que** les éléments de serrage (21) et les éléments de positionnement (22) coopérant respectivement entre eux sont maintenus et guidés de manière à pouvoir se déplacer longitudinalement les uns par rapport aux autres au niveau de leurs surfaces de contact d'élément de serrage (23) et surfaces de contact d'élément de positionnement (24) au moyen d'un premier dispositif de guidage (25).

20. Installation de filtration (1) selon la revendication 18 ou 19, **caractérisée en ce que** les éléments de positionnement respectifs (22) sont maintenus et guidés de manière à pouvoir se déplacer longitudinalement sur le boîtier (2) au moyen d'un deuxième dispositif de guidage (26) sur leur côté opposé à l'élément filtrant respectif (9, 16).

21. Installation de filtration (1) selon l'une des revendications 18 à 20, **caractérisée en ce que** les éléments de serrage (21) sont scellés de manière continue sur leur pourtour contre le boîtier (2) au niveau de leur surface de serrage tournée vers l'élément filtrant respectif (9, 16).

22. Installation de filtration (1) selon l'une des revendications 18 à 21, **caractérisée en ce que** chacun des dispositifs de serrage (12, 13 ; 19, 20) des unités de serrage (10, 17), en particulier chacun de leurs éléments de positionnement (22), est en liaison d'entraînement avec son propre actionneur.

23. Installation de filtration (1) selon l'une des revendications 18 à 22, comprenant en outre des organes de réglage (36) dans chacun des canaux d'entrée (7, 14) et/ou dans chacun des canaux de sortie (11, 18) et/ou une vanne de réglage (37) dans la section de transition vers les canaux d'entrée (7, 14), **caractérisée en ce que** les organes de réglage (36) et/ou la vanne de réglage (37) peuvent limiter la quantité de liquide et/ou de matière fondue guidée dans la chambre de filtration respective (8, 15).

24. Installation de filtration (1) selon l'une des revendications 18 à 23, comprenant en outre un dispositif de commande (32), **caractérisée en ce que** le dispositif de commande (32) commande les organes de réglage (36) et/ou la vanne de réglage (37).

25. Installation de filtration (1) selon l'une des revendications 18 à 24, **caractérisée en ce qu'**un premier dispositif de chauffage (27, 28) est prévu pour chacun des éléments filtrants (9, 16) et que chacun des premiers dispositifs de chauffage (27, 28) est agencé en amont de la chambre de filtration (8, 15) correspondante dans la direction de réglage de l'élément filtrant (9, 16) correspondant.

26. Installation de filtration (1) selon l'une des revendications 18 à 25, **caractérisée en ce qu'**un deuxième dispositif de chauffage (29, 30) est prévu pour chacun des éléments filtrants (9, 16) et que chacun des deuxièmes dispositifs de chauffage (29, 30) est agencé en aval de la chambre de filtration respective (8, 15) dans la direction de réglage de l'élément filtrant respectif (9, 16).

27. Installation de filtration (1) selon l'une des revendications 18 à 26, **caractérisée en ce qu'**au moins un capteur de pression (31) est agencé ou logé dans chacun des canaux d'entrée (7, 14) et/ou dans chacune des chambres de filtration (8, 15) sur le côté tourné vers le canal d'entrée respectif (7, 14) et les capteurs de pression (31) sont conçus pour déterminer la pression accumulée dans le liquide et/ou la masse fondue.

28. Installation de filtration (1) selon l'une des revendications 18 à 27, comprenant en outre un dispositif de commande (32), **caractérisée en ce que** le dispositif de commande (32) est conçu pour surveiller les pressions déterminées par les capteurs de pression (31) et pour commander les organes de réglage (36) et/ou la vanne de réglage (37) de manière à ce que les pressions restent dans des limites prédéfinies.

29. Installation de filtration (1) selon l'une des revendications 18 à 28, comprenant en outre un dispositif de commande (32), **caractérisée en ce que** le dispositif de commande (32) est conçu pour commander de manière proactive, à l'aide d'un apprentissage automatique et sur la base des pressions déterminées par les capteurs de pression (31), des paramètres matériels du liquide et/ou de la masse fondue à traiter et/ou des paramètres de réglage des organes de réglage (36) et/ou de la vanne de réglage (37), les organes de réglage (36) et/ou la vanne de réglage (37) de telle sorte que les pressions restent dans des limites prédéfinies.

30. Installation de filtration (1) selon l'une des revendications 18 à 29, **caractérisée en ce que** le liquide ou la masse fondue est un polymère, en particulier une matière plastique et/ou un matériau pâteux.
